(19) Europäisches Patentamt
European Patent Office
Office européen des brevets

(11) **EP 4 633 178 A1**

(12) **EUROPEAN PATENT APPLICATION**
published in accordance with Art. 153(4) EPC

(43) Date of publication:
**15.10.2025 Bulletin 2025/42**

(51) International Patent Classification (IPC):
***H04N 23/55*** (2023.01)

(21) Application number: **24806506.2**

(86) International application number:
**PCT/CN2024/092592**

(22) Date of filing: **11.05.2024**

(87) International publication number:
**WO 2024/235154 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.05.2023 CN 202310556257**

(71) Applicant: **Huawei Technologies Co., Ltd.
Shenzhen, Guangdong 518129 (CN)**

(72) Inventors:
• **NIU, Yajun
Shenzhen, Guangdong 518129 (CN)**

• **MIYATANI, Sota
Shenzhen, Guangdong 518129 (CN)**
• **IRISAWA, Gentaro
Shenzhen, Guangdong 518129 (CN)**
• **WU, Zhikun
Shenzhen, Guangdong 518129 (CN)**
• **TANG, Wei
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CAMERA MODULE AND ELECTRONIC DEVICE**

(57) This application discloses a camera module and an electronic device. The camera module includes a first optical element, a second optical element, and a photosensitive element that are arranged from an object side to an image side. The first optical element includes an incident surface, a first reflective surface, and an emergent surface that are arranged from the object side to the image side, a convex surface is provided at a paraxial axis of the incident surface, the first reflective surface is configured to change a propagation direction of an optical axis, and a concave surface is provided at a paraxial axis of the emergent surface. The second optical element includes at least one lens. In an image stabilization process of the camera module, the first optical element moves, and the photosensitive element remains fixed. An optical image stabilization mechanism of the camera module has low costs and good imaging quality.

FIG. 3

EP 4 633 178 A1

## Description

This application claims priority to Chinese Patent Application No. 202310556257.4, filed with the China National Intellectual Property Administration on May 16, 2023 and entitled "CAMERA MODULE AND ELECTRONIC DEVICE", which is incorporated herein by reference in its entirety.

## TECHNICAL FIELD

This application relates to the field of image shooting device technologies, and in particular, to a camera module and an electronic device.

## BACKGROUND

Currently, a camera module of an electronic device uses a periscope long-focus lens, to implement long-focus image shooting, and further avoid a large increase in a module size. A mirror is disposed in an optical path of the periscope long-focus lens, to implement optical path folding. The periscope long-focus lens can be further provided with a convex lens on an object side of the mirror, to implement a wide aperture.

The camera module usually implements image stabilization by using two solutions. In a first solution, image stabilization is implemented through movement of a photosensitive element. In a second solution, image stabilization is implemented through movement of the mirror. In the first solution, a drive mechanism of the photosensitive element has a complex structure and circuit design and high costs, resulting in high costs of the camera module. In the second solution, a drive mechanism of the mirror is easy to implement and has low costs. However, if image stabilization is implemented through movement of the mirror, image quality of the camera module deteriorates greatly and imaging quality is poor. Therefore, how to enable a camera module with an image stabilization function to have low costs and high imaging quality is an important research direction of vendors.

## SUMMARY

This application provides a camera module with low costs and high imaging quality and an electronic device.

According to a first aspect, embodiments of this application provide a camera module. The camera module includes a long-focus lens and a photosensitive element. The photosensitive element is located on an image side of the long-focus lens. The long-focus lens includes a first optical element and a second optical element. The first optical element includes an incident surface, a first reflective surface, and an emergent surface that are arranged from an object side to the image side. A convex surface is provided at a paraxial axis of the incident surface. The first reflective surface changes a propagation direction of an optical axis from a first direction to a second direction. The second direction intersects the first direction. A concave surface is provided at a paraxial axis of the emergent surface. The second optical element is located on an image side of the first optical element, and the second optical element includes at least one lens.

In an image stabilization process of the camera module, the first optical element rotates around the first direction and/or rotates around a third direction, the photosensitive element remains fixed, and the third direction intersects the first direction and intersects the second direction.

In this application, the camera module can drive, by using a conventional image stabilization motor, the first optical element to move, and no image stabilization drive mechanism needs to be disposed on the photosensitive element. Therefore, costs of an optical image stabilization mechanism of the camera module can be reduced. In addition, the incident surface having a convex surface structure and the emergent surface having a concave surface structure are disposed on the first optical element, and the incident surface and the emergent surface move synchronously with the first reflective surface. Therefore, in the image stabilization process of the camera module, the incident surface can receive light, and the emergent surface can compensate for an aberration, to help reduce a module size of the camera module, implement miniaturization of the camera module, improve an image stabilization effect of the camera module, and improve imaging quality of the camera module.

In addition, in a conventional solution in which an image sensor is driven to shift (shift) to implement image stabilization, because an image stabilization drive mechanism needs to be disposed around the image sensor, and the image stabilization drive mechanism has a complex structure and circuit design and needs to occupy large installation space, when a photosensitive element whose sensor diagonal is greater than 10 mm needs to be used, a module size of a camera module is at least 32 mm. However, in an implementation of this application, for a photosensitive element of a same size, because the photosensitive element is a fastened structure, no image stabilization drive mechanism needs to be disposed, and the camera module does not need to reserve installation space of the image stabilization drive mechanism around the photosensitive element. Therefore, a module size of the camera module can be reduced, and this facilitates miniaturization of the camera module. In some implementations, the module size may be reduced to less than 31 mm.

In addition, when an overall volume of the camera module is limited, because there is no need to reserve the installation space of the image stabilization drive structure around the photosensitive element, arrangement space of the photosensitive element is sufficient, and the photosensitive element with a large photosensitive area can be selected for the camera module. This helps implement a large target surface of the camera module.

Therefore, the camera module in this implementation of this application can implement long-focus image shooting with a large target surface, low costs, a small size, and high imaging quality.

In some possible implementations, a focal length F1 of the first optical element and a focal length Fsys of the long-focus lens satisfy the following: F1/Fsys≥1.2. In this implementation, a ratio of the focal length of the first optical element to the focal length of the long-focus lens is set to be greater than or equal to 1.2, so that the camera module can have better image definition when implementing image stabilization through movement of the first optical element, to obtain better imaging quality.

In some possible implementations, the focal length F1 of the first optical element and the focal length Fsys of the long-focus lens satisfy the following: 22.5≥F1/Fsys≥1.2. In this implementation, the camera module further limits the ratio F1/Fsys of the focal length F1 of the first optical element to the focal length Fsys of the long-focus lens, so that miniaturization can be more easily implemented while ensuring imaging quality. When a value of F1/Fsys is larger, the focal length F1 of the first optical element is larger, and the camera module is more likely to obtain better image definition when implementing image stabilization through movement of the first optical element. When the value of F1/Fsys is smaller, the focal length F1 of the first optical element is smaller, and the camera module is more likely to implement miniaturization of the camera module.

In some possible implementations, the focal length F1 of the first optical element satisfies the following: F1≤380 mm. In this implementation, the camera module limits the value of the focal length F1 of the first optical element, to ensure imaging quality and module miniaturization.

In some possible implementations, the focal length Fsys of the long-focus lens satisfies the following: 10 mm≤Fsys<40 mm.

In some possible implementations, the incident surface of the first optical element may be a spherical surface, to reduce processing difficulty. The emergent surface of the first optical element may be a spherical surface, to reduce processing difficulty. In another implementation, the incident surface and/or the emergent surface may alternatively be aspheric surfaces.

In some possible implementations, a curvature radius L1S1R of the incident surface satisfies the following: 6 mm≤L1S1R≤300 mm.

A larger curvature radius L1S1R of the incident surface indicates better processing of the incident surface, and a smaller curvature radius L1S1R of the incident surface indicates a better light receiving effect of the incident surface. In this implementation, a value of the curvature radius L1S1R of the incident surface is limited within a specific range, so that processing difficulty of the incident surface is low, and a light receiving effect is good.

In some possible implementations, the curvature radius L1S1R of the incident surface satisfies the following: 6 mm≤L1S1R≤23 mm. In this implementation, the incident surface is easy to process and has a good light receiving effect. The curvature radius L1S1R of the incident surface may alternatively satisfy the following: 10 mm≤L1S1R≤20 mm.

In some possible implementations, a curvature radius L2S2R of the emergent surface satisfies the following: 10 mm≤L2S2R≤300 mm. A larger curvature radius L2S2R of the emergent surface indicates better processing of the emergent surface, and a smaller curvature radius L2S2R of the emergent surface indicates better aberration compensation implemented by the emergent surface. In this implementation, a value of the curvature radius L2S2R of the emergent surface is limited within a specific range, so that processing difficulty of the emergent surface is low, and an aberration compensation effect is good.

In some possible implementations, a curvature radius L2S2R of the emergent surface satisfies the following: 15 mm≤L2S2R≤300 mm. In this implementation, the emergent surface is easy to process and can better compensate for an aberration. The curvature radius L2S2R of the emergent surface may alternatively satisfy the following: 16 mm≤L2S2R≤40 mm.

In some possible implementations, the curvature radius L1S1R of the incident surface and the focal length Fsys of the long-focus lens satisfy the following: 0.4≤L1S1R/Fsys≤6 or 0.4≤L1S1R/Fsys≤1.4. In this implementation, the camera module limits a value of L1S1R/Fsys, to better balance light receiving performance and optical image stabilization performance.

In some possible implementations, the curvature radius L2S2R of the emergent surface and the focal length Fsys of the long-focus lens satisfy the following: 0.4≤L2S2R/Fsys≤10 or 0.9≤L2S2R/Fsys≤6. In this implementation, the camera module limits a value of L2S2R/Fsys, to improve imaging quality and optical image stabilization performance.

In some possible implementations, the first optical element includes a first lens and a second lens, the first lens is located on an object side of the first reflective surface, an object side surface of the first lens is the incident surface, the second lens is located on an image side of the first reflective surface, and an image side surface of the second lens is the emergent surface.

In some possible implementations, the first lens may have a positive focal power, and the first lens can be configured to shrink a beam. For example, the first lens may be a convex lens. In this implementation, a beam entering the long-focus lens starts to shrink after passing through the first lens, when reaching the second optical element after being reflected by the first reflective surface, the beam has already shrunk through a long optical path, a diameter of the beam is small, and the second optical element is no longer a maximum limitation on a clear aperture of the long-focus lens. Therefore, at a specific device thickness, even if a size of the second optical element is limited by the device thickness, the first lens with the positive focal power is disposed on the first optical element, so that a clear aperture of the long-focus lens can be effectively increased while a module size is ensured, to implement a wide aperture.

In some possible implementations, an F-number of the long-focus lens may be less than or equal to 2.4. For example, the F-number of the long-focus lens may be 1.4, 1.56, 1.66, 2.06, 2.16, 2.24, 2.36, or the like.

In some possible implementations, a focal length f1 of the first lens and the focal length Fsys of the long-focus lens satisfy the following: $0.5 \leq f1/Fsys \leq 20$. In this implementation, the camera module limits a value of f1/Fsys, to better balance light receiving performance and optical image stabilization performance.

In some possible implementations, the second lens may have a negative focal power, to better compensate for an aberration and improve imaging quality of the camera module. In addition, the second lens can reduce an incident angle of a beam on the second optical element, reduce design difficulty of the second optical element, and achieve a better imaging effect.

In some possible implementations, a focal length f2 of the second lens and the focal length Fsys of the long-focus lens satisfy the following: $-20 \leq f2/Fsys \leq 0$. In this implementation, the camera module limits a value of f2/Fsys, to improve imaging quality and optical image stabilization performance.

In some possible implementations, the first optical element includes a first reflector, the first reflector includes the first reflective surface, and the first reflector is a prism. A refractive index Nd of the first reflector satisfies the following: $Nd \leq 1.85$. In this implementation, a value of the refractive index Nd of the first reflector is limited. Because the refractive index Nd is inversely proportional to an Abbe number, an Abbe number of the first reflector is high. Therefore, the first reflector has high dispersion performance, to ensure that no excessively large residual chromatic aberration is generated, and reduce design difficulty of a lens group located on an image side of the first reflector.

In some possible implementations, the first optical element includes a first reflector, the first reflector includes the first reflective surface, and the first reflector is a prism. An image side surface of the first lens is fastened to an object side surface of the first reflector, and an object side surface of the second lens is fastened to an image side surface of a second reflector. In this case, after the first optical element is assembled, an assembly structure of the first lens and/or the second lens and the first reflector is compact. This helps implement miniaturization of the camera module.

In some possible implementations, the first lens, the first reflector, and the second lens are all made of a glass material, the first lens is glued to the first reflector, and the second lens is glued to the first reflector. In this implementation, both a connection between the first lens and the first reflector and a connection between the second lens and the first reflector are a glued connection between glass. A connection process is stable and reliable, so that an assembly yield of the first optical element is high, and optical performance of the first optical element is better. In some other implementations, the connection between the first lens and the first reflector and the connection between the second lens and the first reflector may alternatively be implemented by using an embossing process.

For example, the first reflective surface may be a plane, to have good processability. In some other implementations, when implementing reflection of a ray, the first reflective surface may further correct an aberration like astigmatism, to further improve image quality or reduce a volume. For example, the first reflective surface may alternatively be a spherical surface, a cylindrical surface, or a free-form surface. The spherical surface may be a convex surface or a concave surface. The cylindrical surface has curvature in one direction and extends in a straight line in the other direction. For example, a highly reflective film may be further disposed on the first reflective surface, to improve reflection efficiency, so that rays of a beam are completely or nearly completely reflected and then enter a subsequent optical element.

In some possible implementations, the second optical element includes a first lens group and a second lens group, the second lens group is located on an image side of the first lens group, and the camera module implements focusing through movement of the first lens group and/or the second lens group along the optical axis. In this implementation, the second optical element includes two lens groups, and the camera module can implement automatic focusing through movement of at least one of the two lens groups. This helps implement macro image shooting.

For example, the first lens group has a positive focal power, and the second lens group has a negative focal power. In some examples, the first lens group is a movable lens group, the second lens group is a fixed lens group, and the camera module implements focusing through movement of the first lens group along the optical axis. In this case, a focusing stroke of the first lens group is small, and aberration deterioration caused by focusing can be effectively suppressed, so that the camera module has a strong focusing capability, and the camera module has high imaging quality and a strong macro capability. Because the focusing stroke of the first lens group is small, a volume of a motor configured to drive the first lens group to move is reduced, so that the camera module is more easily miniaturized. In addition, the second lens group can function as a flat-field lens, to compensate for a partial curvature of field change caused by focusing. This enhances a focusing capability of the first lens group, so that the camera module has a strong focusing capability and higher imaging quality.

In some other implementations, the first lens group is a fixed lens group, the second lens group is a movable lens group, and the camera module implements focusing through movement of the second lens group along the optical axis.

In some other implementations, both the first lens group and the second lens group are movable lens groups, and the camera module may implement focusing through movement of the first lens group and the second lens group along the optical axis. In a focusing process, movement directions of the first lens group and the second lens group may be the same or different, and movement distances may be the same or different. In this case, in this implementation, a focusing speed of the camera module is high, a focusing stroke of the lens group is small, and the camera module can implement macro image shooting.

In some possible implementations, a focal length F2 of the first lens group and the focal length Fsys of the long-focus lens satisfy the following: $0.2 \leq F2/Fsys \leq 1$. In this implementation, $F2/Fsys \leq 1$ is set, so that the first lens group can implement focusing by moving a small displacement, to reduce a focusing stroke and improve a focusing capability. $0.2 \leq F2/Fsys$ is set, to help control an aberration of a beam passing through the first lens group, so that the second lens group is easier to perform aberration correction, and the camera module has better imaging quality. Therefore, a ratio of the focal length F2 of the first lens group to the focal length Fsys of the long-focus lens is appropriately designed, so that the camera module can balance a focusing capability and imaging quality.

For example, the focal length F2 of the first lens group and the focal length Fsys of the long-focus lens may alternatively satisfy the following: $0.3 \leq F2/Fsys \leq 0.6$.

In some possible implementations, a focal length F3 of the second lens group and the focal length Fsys of the long-focus lens satisfy the following: $-1.5 \leq F3/Fsys \leq -0.2$. For example, the focal length F3 of the second lens group and the focal length Fsys of the long-focus lens may alternatively satisfy the following: $-0.9 \leq F3/Fsys \leq -0.3$.

In this implementation, a ratio of the focal length F3 of the second lens group to the focal length Fsys of the long-focus lens is appropriately designed, so that the camera module can reduce an image quality difference between long-shot image shooting and close-up image shooting with low assembly sensitivity, to obtain more uniform image quality. When the assembly sensitivity is low, a deviation (tolerance) range allowed during assembly of the long-focus lens is larger, and assembly is easy.

In some possible implementations, the first optical element includes two or three lenses, the first lens group includes three to five lenses, and the second lens group includes one to four lenses.

A first lens that is of the first lens group and that is closest to the object side may have a positive focal power, so that a beam passing through the first optical element can smoothly enter the first lens group, to improve imaging quality of the camera module.

A last lens that is of the second lens group and that is closest to the image side may have a negative focal power, to compensate for an aberration, so as to improve imaging quality of the camera module.

In some possible implementations, the camera module implements focusing through movement of the second optical element along the optical axis. In this case, the plurality of lenses of the second optical element form one lens group. In this implementation, an optical path design and a structure design of the camera module are simple and easy to implement, and the camera module has good processability.

In some possible implementations, the first optical element includes two or three lenses, and the second optical element includes three to six lenses. For example, the second optical element has a positive focal power. In some implementations, a first lens that is of the second optical element and that is closest to the object side may have a positive focal power, and a last lens that is of the second optical element and that is closest to the image side may have a negative focal power. In this case, an optical path design of the camera module is simple, and imaging quality is high.

In some possible implementations, a total track length TTL of the long-focus lens and the focal length Fsys of the long-focus lens satisfy the following: $0.8 \leq TTL/Fsys \leq 3$.

In this implementation, a ratio of the total track length TTL of the long-focus lens to the focal length Fsys of the long-focus lens is limited, so that the long-focus lens satisfies both a long-focus image shooting requirement and a short total length requirement, and a thickness of the long-focus lens is thin. This helps implement miniaturization of the camera module.

In some possible implementations, the total track length TTL of the long-focus lens satisfies the following: 15 mm$\leq$TTL$\leq$50 mm. For example, the total track length TTL of the long-focus lens may alternatively satisfy the following: 15 mm$\leq$TTL$\leq$30 mm.

In some possible implementations, the long-focus lens further includes a second reflective surface, the second reflective surface is located on an image side of the second optical element, the second reflective surface changes the propagation direction of the optical axis from the second direction to a fourth direction, and the fourth direction intersects the second direction. In this case, an arrangement plane of the photosensitive element may be perpendicular to the thickness direction of the electronic device, and a size of a target surface is not limited by a size in the thickness direction of the electronic device. This facilitates a large target surface design of the camera module.

In some possible implementations, a field of view of the long-focus lens is less than or equal to 40°. In this implementation, the field of view of the long-focus lens is limited, so that the camera module can better implement long-focus image shooting, have better optical image stabilization performance, and have better imaging quality.

In some possible implementations, a semi-sensor diagonal ImgH of the photosensitive element satisfies the following: 2.5 mm≤ImgH≤8.16 mm, 2.5 mm≤ImgH≤4.0 mm, or 4.2 mm≤ImgH≤8.16 mm.

In this implementation, because the photosensitive element has sufficient arrangement space, and the camera module has a small limitation on a size of the photosensitive element, a large target surface or a small target surface may be flexibly selected for the photosensitive element based on a requirement.

In some implementations, an optical surface of at least one lens of the long-focus lens is an aspheric surface, and the optical surface of an aspheric shape has different focal powers from a paraxial axis to an outer field of view region, so that an imaging picture has more balanced image quality. In addition/Alternatively, the optical surface of the at least one lens of the long-focus lens may be a free-form surface, to correct an aberration.

In some implementations, the long-focus lens further includes an aperture diaphragm. For example, the aperture diaphragm may be mounted on the second optical element. In this case, an aperture adjustment effect of the aperture diaphragm is better, and the imaging quality of the long-focus lens can be improved. In some other implementations, the aperture diaphragm may alternatively be mounted at another position of the long-focus lens. This is not strictly limited in implementations of this application.

The aperture diaphragm may be of an isolated ring structure or a variable blade structure, or the aperture diaphragm may be implemented by using a surface spraying process, for example, the aperture diaphragm is formed by spraying a light shielding material on a lens. A position of the aperture diaphragm may be fastened or may be variable. For example, the position of the aperture diaphragm is variable, and the position of the aperture diaphragm may be adjusted based on a focusing case, to be located between different lenses.

In some implementations, a special-shape technology may be used for at least one lens of the long-focus lens, to reduce a size of the long-focus lens. For example, at least one lens in the second lens or the second optical element may have a notch for reducing a height of the lens. The notch may be implemented by using an I-CUT process. The notch for reducing the height of the lens is provided in the at least one lens in the second lens or the second optical element, so that a size of the long-focus lens in a height direction can be effectively reduced, the long-focus lens can be better applied to a miniaturized electronic device, and an application scope of the long-focus lens is expanded. In addition, because the height of the lens decreases in a notch manner, a large clear aperture may be set for the lens, so that an amount of light admitted through the long-focus lens is increased, and imaging quality of the long-focus lens is better. Alternatively, the special-shape technology may be used on a structural support of a lens like a lens barrel or a partition, to reduce the size of the long-focus lens.

In some implementations, a peripheral side surface or a supporting surface of at least one lens of the long-focus lens may be blackened or roughened, to eliminate stray light and improve imaging quality. The blackening may be coating or plating black ink or another extinction material, or may be bonding a film. The roughening is mainly used to increase roughness. Certainly, in some other implementations, the long-focus lens may eliminate stray light in another manner. This is not strictly limited in implementations of this application.

In some implementations, materials used by different lenses of the long-focus lens may have different temperature characteristics, for example, glass and plastic are separately used, to reduce impact of an ambient temperature.

In some implementations, a diffraction structure may be formed on an optical surface of at least one lens of the long-focus lens. In this implementation, the diffraction structure is appropriately disposed, so that a chromatic aberration can be reduced, and a volume of the long-focus lens can be reduced.

In some implementations, the long-focus lens may further include a liquid lens. For example, the liquid lens may be located between the first optical element and the second optical element. In this implementation, a focus adjustment effect can be enhanced by using the liquid lens, to implement ultra-macro image shooting. The liquid lens is a mechanical part that uses liquid as a lens and changes a focal length by changing a curvature of the liquid.

According to a second aspect, an embodiment of this application further provides an electronic device. The electronic device includes an image processor and the camera module according to any one of the foregoing implementations, the image processor is communicatively connected to the camera module, and the image processor is configured to: obtain image data from the camera module, and process the image data. The electronic device in this application has good imaging quality and low costs during image shooting.

**BRIEF DESCRIPTION OF DRAWINGS**

FIG. 1 is a diagram of a structure of an electronic device in some embodiments according to an embodiment of this application;

FIG. 2 is a diagram of a partial exploded structure of the electronic device shown in FIG. 1;
FIG. 3 is a diagram of a partial structure of a camera module shown in FIG. 2 in some embodiments;
FIG. 4 is a diagram of an optical path structure of a camera module shown in FIG. 3 in some usage statuses;
FIG. 5 is a diagram of a simulation effect of the camera module shown in FIG. 3 in a possible embodiment;
FIG. 6 is a diagram of a partial structure of the camera module shown in FIG. 2 in some other embodiments;
FIG. 7 is a diagram of an optical path structure of a camera module shown in FIG. 6 in some usage statuses;
FIG. 8 is a diagram of a simulation effect of the camera module shown in FIG. 6 in a possible embodiment;
FIG. 9 is a diagram of a partial structure of the camera module shown in FIG. 2 in some other embodiments;
FIG. 10 is a diagram of an optical path structure of a camera module shown in FIG. 9 in some usage statuses;
FIG. 11 is a diagram of a simulation effect of the camera module shown in FIG. 9 in a possible embodiment;
FIG. 12 is a diagram of a partial structure of the camera module shown in FIG. 2 in some other embodiments;
FIG. 13 is a diagram of an optical path structure of a camera module shown in FIG. 12 in some usage statuses;
FIG. 14 is a diagram of a simulation effect of the camera module shown in FIG. 12 in a possible embodiment;
FIG. 15 is a diagram of a partial structure of the camera module shown in FIG. 2 in some other embodiments;
FIG. 16 is a diagram of an optical path structure of a camera module shown in FIG. 15 in some usage statuses; and
FIG. 17 is a diagram of a simulation effect of the camera module shown in FIG. 15 in a possible embodiment.

## DESCRIPTION OF EMBODIMENTS

For ease of understanding, the following first explains and describes English abbreviations and related technical terms in embodiments of this application.

A focal power (focal power) is equal to a difference between convergence of an image beam and convergence of an object beam, and represents a capability of an optical system to refract rays.

For a lens or a lens group with a positive focal power, the lens or lens group has a positive focal length, and has an effect of converging rays.

For a lens or a lens group with a negative focal power, the lens or lens group has a negative focal length, and has an effect of diverging rays.

A focal length (focal length) is a measurement of how strongly the optical system converges or diverges light, and refers to a vertical distance from an optical center of a lens or a lens group to a focal plane when a clear image of an infinite scene is formed on the focal plane by using the lens or the lens group. From a practical perspective, the focal length may be understood as a distance from a center of a camera lens to a plane when an object is at an infinite distance. For a prime lens, a position of an optical center of the prime lens is fixed. For a long-focus lens, a change in an optical center of a camera lens causes a change in a focal length of the camera lens.

For an object side surface, with a lens as a boundary, a side on which a shot object is located is an object side, and a surface of the lens close to the object side is referred to as the object side surface.

For an image side surface, with a lens as a boundary, a side on which an image of a shot object is located is an image side, and a surface of the lens close to the image side is referred to as the image side surface.

An aperture diaphragm (aperture diaphragm) is an apparatus used to control an amount of light reaching a light-sensitive surface after rays pass through a camera lens, and is usually located in the camera lens.

An F-number (Fno), also referred to as an F-stop, is a relative value (a reciprocal of a relative aperture) obtained by dividing a focal length of a camera lens by an entrance pupil diameter of the camera lens. When the F-number is smaller, an amount of admitted light in a same unit time is larger. When the F-number is larger, a depth of field is smaller, and background content of a photo is blurred, which is similar to an effect of the long-focus lens.

A total track length (total track length, TTL) is a total length from a surface of a camera lens closest to an object side to an imaging plane. TTL is a main factor that forms a camera height.

An imaging plane is a carrier plane that is located on image sides of all lenses in a long-focus lens and on which an image is formed after rays sequentially pass through the lenses in the long-focus lens.

An optical axis is an axis that runs vertically through the center of a lens. An optical axis of a camera lens is an axis that passes through centers of lenses of the camera lens. When rays parallel to the optical axis enter a convex lens, an ideal convex lens converges all rays at one point behind the lens. This point at which all the rays converge is a focal point.

A focal point is a point at which parallel rays converge after being refracted by a lens or a lens group.

An image focal plane, also referred to as a rear focal plane or a second focal plane, is a plane that passes through an image focal point (also referred to as a rear focal point or a second focal point) and that is perpendicular to an optical axis of a system.

An Abbe (Abbe) number, namely, a dispersion coefficient, is a difference ratio of refractive indices of an optical material at different wavelengths, and represents a degree of dispersion of the material.

Field of view (field of view, FOV): In an optical instrument, an included angle, with a lens of the optical instrument as a vertex, including two edges of a maximum range within which an object image of a measured target is visible through the lens is referred to as the field of view. The field of view determines a view scope of the optical instrument. A larger field of view indicates a larger view and a smaller optical zoom ratio.

A semi-sensor diagonal ImgH (Image Hight) represents a half of a diagonal length of an effective pixel region on a photosensitive chip, namely, an image height of an imaging plane.

Aberration: A paraxial region of an optical system has the properties of an ideal optical system. A paraxial ray emitted from a point on an object intersects an image plane at one point (namely, a paraxial image point). However, rays actually passing through different apertures of a camera lens can hardly perfectly intersect at one point. Instead, there are deviations from the position of the paraxial image point. These deviations are collectively referred to as aberrations.

An axial chromatic aberration (longitudinal spherical aber) is also referred to as a longitudinal chromatic aberration or a positional chromatic aberration or an axial aberration. A beam of rays parallel to an optical axis converges at different positions after passing through a camera lens. This aberration is referred to as a positional chromatic aberration or an axial chromatic aberration. This is because positions of images formed by the camera lens for light of different wavelengths are different, so that image focal planes of light of different colors cannot overlap during final imaging, and polychromatic light is scattered to form dispersion.

A distortion (distortion) is a degree at which an image formed by an optical system for an object is distorted relative to the object. A distortion is caused because a height of a point at which chief rays with different fields of view intersect a Gaussian image plane after the chief rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

Astigmatism (astigmatism): Because an object point is not on an optical axis of an optical system, there is an inclination angle between the optical axis and a beam emitted by the object point. After the beam is refracted by a lens, convergence points of a meridian pencil and a sagittal pencil are not a same point. That is, the beam cannot be focused at one point, and imaging is not clear, resulting in astigmatism. The meridian pencil and the sagittal pencil are names of beams in two vertical planes in a rotationally symmetric optical system.

A meridian plane (meridian plane) is a plane formed by a chief ray (a chief beam) from an object point off an optical axis and the optical axis, and is referred to as the meridian plane.

A sagittal surface (sagittal surface) is a plane that is perpendicular to the meridian plane and that is of a chief ray (a chief beam) that passes through the object point off the optical axis, and is referred to as the sagittal surface.

A curvature of field (curvature of field) indicates a difference, in an optical axis direction, between a position of a clearest image point obtained after a non-central field of view ray passes through an optical lens unit and a position of a clearest image point in a central field of view. When a lens has a curvature of field, an intersection of an entire beam does not coincide with an ideal image point. Although a clear image point can be obtained at each specific point, an entire image plane is a curved surface.

The following describes technical solutions in embodiments of this application with reference to accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in descriptions of embodiments of this application, "a plurality of" means two or more.

In the following, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features.

In addition, in embodiments of this application, a limitation on a relative position relationship is mentioned, for example, parallel or vertical. These limitations are all relative to the current process level, and are not absolutely strict. A small deviation is allowed, for example, approximate parallel or vertical is acceptable. For example, that A is parallel to B means that A is parallel or approximately parallel to B, and an included angle of 0 degrees to 10 degrees between A and B is allowed. For example, that A is vertical to B means that A is vertical or approximately vertical to B, and an included angle of 80 degrees to 100 degrees between A and B is allowed.

Embodiments of this application provide a camera module and an electronic device including the camera module. The camera module includes a first optical element, a second optical element, and a photosensitive element that are arranged from an object side to an image side. The first optical element includes an incident surface, a first reflective surface, and an emergent surface that are arranged from the object side to the image side, a convex surface is provided at a paraxial axis of the incident surface, the first reflective surface is configured to change a propagation direction of an optical axis, and a concave surface is provided at a paraxial axis of the emergent surface. The second optical element includes at least one lens. In an image stabilization process of the camera module, the first optical element moves, and the photosensitive element remains fixed. In this case, the camera module can drive, by using a conventional image stabilization motor, the first optical element to move, and no image stabilization drive mechanism needs to be disposed on the photosensitive element. Therefore, costs of an optical image stabilization mechanism of the camera module can be reduced. In addition, the incident surface having a convex surface structure and the emergent surface having a concave surface structure are disposed on the first optical element, and the incident surface and the emergent surface move synchronously with a reflective surface. Therefore, in the image stabilization process of the camera module, the incident surface can receive light, and the emergent surface can compensate for an aberration, to help reduce a module size of the camera module, implement miniaturization of the camera module, improve an image stabilization effect of the camera module, and improve imaging quality of the camera module.

The electronic device may be a device that has a photographing or video shooting function, like a mobile phone, a tablet computer, a laptop computer, a camera, or a wearable device. The wearable device may be a device like a band, a watch, or glasses.

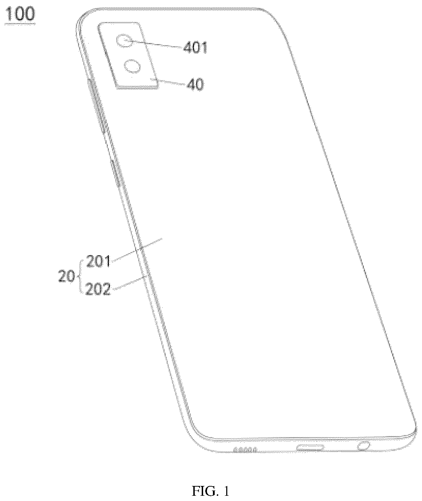

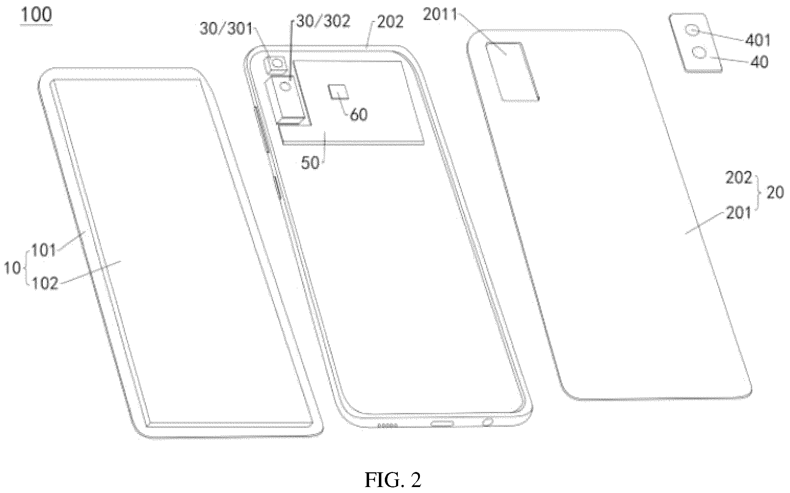

FIG. 1 is a diagram of a structure of an electronic device 100 in some embodiments according to an embodiment of this application. FIG. 2 is a diagram of a partial exploded structure of the electronic device 100 shown in FIG. 1. An example in which the electronic device 100 is a mobile phone is used for description in embodiments. It may be understood that FIG. 1 and FIG. 2 merely schematically show some components included in the electronic device 100. Actual shapes, actual sizes, actual positions, and actual structures of these components are not limited by FIG. 1 and FIG. 2. The electronic device 100 may alternatively include more or fewer components than those shown in FIG. 1 and FIG. 2.

In some embodiments, the electronic device 100 may include a screen 10, a rear housing 20, a camera module 30, and a camera decorative cover 40. The screen 10 is configured to display an image, a video, or the like. The screen 10 includes a transparent cover 101 and a display 102. The transparent cover 101 and the display 102 are stacked and fastened. The transparent cover 101 is mainly configured to protect the display 102 and prevent dust from entering the display 102. A material of the transparent cover 101 includes but is not limited to glass. The display 102 may be a flexible display or a rigid display. For example, the display 102 may be an organic light-emitting diode (organic light-emitting diode, OLED) display, an active-matrix organic light-emitting diode (active-matrix organic light-emitting diode, AMOLED) display, a mini light-emitting diode (mini light-emitting diode) display, a micro light-emitting diode (micro light-emitting diode) display, a micro organic light-emitting diode (micro organic light-emitting diode) display, a quantum dot light-emitting diode (quantum dot light-emitting diode, QLED) display, a liquid crystal display (liquid crystal display, LCD), or the like.

For example, the rear housing 20 is configured to protect an internal electronic component of the electronic device 100. The rear housing 20 includes a rear cover 201 and a bezel 202. The rear cover 201 is located on a side that is of the display 102 and that is away from the transparent cover 101, and is stacked with the transparent cover 101 and the display 102. The bezel 202 is fastened to the rear cover 201. For example, the bezel 202 may be fastened to the rear cover 201 by using an adhesive. Alternatively, the bezel 202 and the rear cover 201 may be of an integrated structure. In other words, the bezel 202 and the rear cover 201 are of an integrated structure. The bezel 202 is located between the rear cover 201 and the transparent cover 101. The transparent cover 101 may be fastened to the bezel 202 by using an adhesive. The transparent cover 101, the rear cover 201, and the bezel 202 enclose internal accommodation space of the electronic device 100. The internal accommodation space accommodates the display 102 inside.

For example, the camera module 30 is configured to take a photo/video. For example, the camera module 30 may be located in the internal accommodation space of the electronic device 100. There may be one or more camera modules 30. For example, two camera modules 30 are used for illustration in embodiments. The camera module 30 may be used as a rear-facing camera module, or may be used as a front-facing camera module.

For example, a light incident surface of the camera module 30 faces the rear cover 201. A mounting opening 2011 is disposed on the rear cover 201, and the camera decorative cover 40 covers and is fastened to the mounting opening 2011. The camera decorative cover 40 is configured to protect the camera module 30. In some embodiments, the camera decorative cover 40 protrudes to a side that is of the rear cover 201 and that is away from the transparent cover 101. In this way, the camera decorative cover 40 can expand mounting space of the camera module 30 in a thickness direction of the electronic device 100. In some other embodiments, the camera decorative cover 40 may alternatively be flush with the rear cover 201 or concave to the internal accommodation space of the electronic device 100. A transparent window 401 is disposed on the camera decorative cover 40. The transparent window 401 allows an object ray to enter the light incident surface of the camera module 30. In embodiments, the camera module 30 is used as a rear-facing camera module of the electronic device 100. For example, the two camera modules 30 may be a camera module 301 and a camera module 302. The camera module 301 may be used as a rear-facing primary camera module, and the camera module 302 may be used as a rear-facing long-focus camera module. In another embodiment, the electronic device 100 may further include another camera module 30, used as a rear-facing wide-angle camera module.

In another embodiment, the light incident surface of the camera module 30 faces the transparent cover 101. An optical path avoidance hole is disposed on the display 102. The optical path avoidance hole allows the object ray to pass through the transparent cover 101 and then enter the light incident surface of the camera module 30. In this way, the camera module 30 is used as a front-facing camera module of the electronic device 100.

In some embodiments, as shown in FIG. 2, the electronic device 100 further includes a circuit board 50 and an image processor 60. The circuit board 50 and the image processor 60 are located in the internal accommodation space of the electronic device 100. The image processor 60 is fastened to the circuit board 50 and is electrically connected to the circuit board 50. The image processor 60 is communicatively connected to the camera module 30. The image processor 60 is configured to: obtain image data from the camera module 30, and process the image data. The communication connection between the camera module 30 and the image processor 60 may include an electrical connection like a cable connection for performing data transmission, or may include coupling or the like for implementing data transmission. It may be understood that the communication connection between the camera module 30 and the image processor 60 may alternatively be implemented in another manner in which data transmission can be implemented.

In some embodiments, the electronic device 100 may further include an analog-to-digital converter (also referred to as an A/D converter, not shown in the figure). The analog-to-digital converter is connected between the camera module 30 and the image processor 60. The analog-to-digital converter is configured to convert a signal generated by the camera module 30 into a digital image signal and transmit the digital image signal to the image processor 60, then the image processor 60 processes the digital image signal, and finally, the screen 10 displays an image or a video.

In some embodiments, the electronic device 100 may further include a memory (not shown in the figure). The memory is communicatively connected to the image processor 60. The image processor 60 processes the digital image signal, and then transmits the image to the memory. In this way, when the image needs to be viewed subsequently, the image can be found from the memory at any time and displayed on the screen 10. In some embodiments, the image processor 60 further compresses a processed digital image signal, and then stores a compressed digital image signal in the memory, to save memory space.

In another embodiment, the electronic device 100 may not include the screen 10 and/or the camera decorative cover 40.

It may be understood that a mounting position of the camera module 30 of the electronic device 100 in embodiments shown in FIG. 1 and FIG. 2 is merely an example. The mounting position of the camera module 30 is not strictly limited in this application. In some other embodiments, the camera module 30 may alternatively be mounted at another position of the electronic device 100. For example, the camera module 30 may be mounted in the upper middle or the upper right corner of the back of the electronic device 100. In some other embodiments, the electronic device 100 may include a terminal body and an auxiliary component that can rotate, move, or disassemble relative to the terminal body, and the camera module 30 may alternatively be disposed on the auxiliary component.

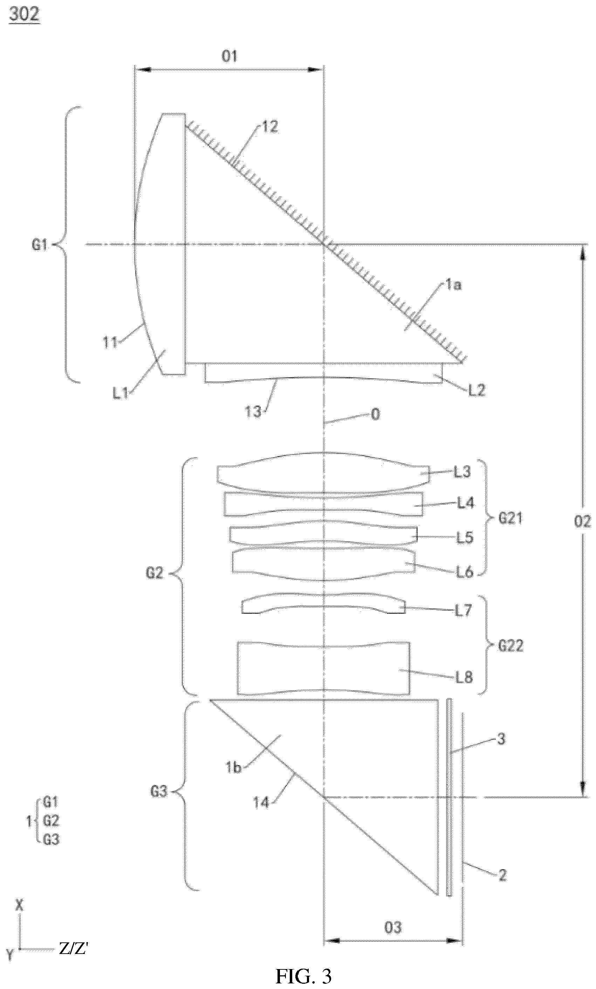

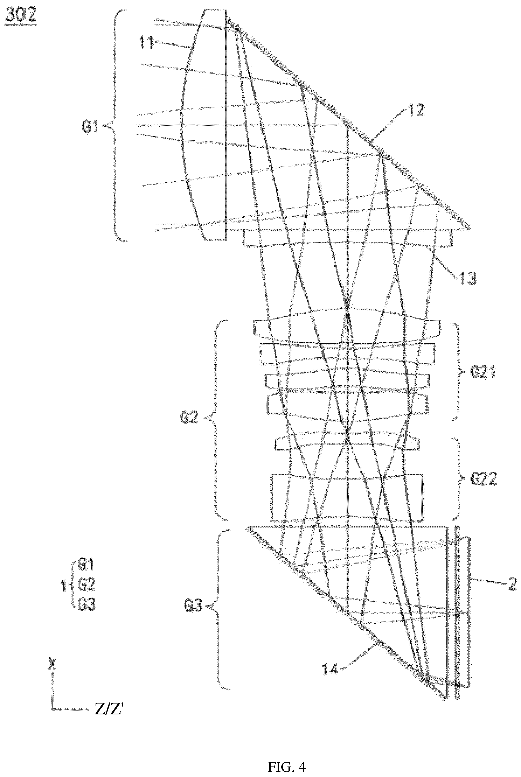

FIG. 3 is a diagram of a partial structure of the camera module 302 shown in FIG. 2 in some embodiments. FIG. 4 is a diagram of an optical path structure of the camera module 302 shown in FIG. 3 in some usage statuses.

In some embodiments, the camera module 302 includes a long-focus lens 1, a photosensitive element 2, and a light filter 3. The photosensitive element 2 is located on an image side of the long-focus lens 1. The camera module 302 may further include a circuit board (not shown in the figure), and the photosensitive element 2 may be fastened to the circuit board. The light filter 3 may be located between the long-focus lens 1 and the photosensitive element 2. Rays can pass through the long-focus lens 1 to irradiate a photosensitive surface of the photosensitive element 2. For example, a working principle of the camera module 302 is as follows: Rays reflected by a shot object generate an optical image through the long-focus lens 1, and the optical image is projected to the photosensitive surface of the photosensitive element 2. The photosensitive element 2 converts the optical image into an electrical signal, namely, an analog image signal, and transmits the electrical signal to an analog-to-digital converter. The analog-to-digital converter converts the electrical signal into a digital image signal and sends the digital image signal to the image processor 60.

The photosensitive element 2 (also referred to as an image sensor) is a semiconductor chip, includes hundreds of thousands to millions of photodiodes on a surface, and generates charges when being irradiated by light. The photosensitive element 2 may be a charge-coupled device (charge-coupled device, CCD), or may be a complementary metal-oxide semiconductor (complementary metal-oxide semiconductor, CMOS) device. The charge-coupled device is made of a highly photosensitive semiconductor material, and can convert rays into charges. The charge-coupled device is constituted by many photosensitive units, usually in megapixels. When the surface of the charge-coupled device is irradiated by rays, each photosensitive unit reflects electric charges on a component. Signals generated by all photosensitive units are combined to form a complete picture. The complementary metal-oxide semiconductor device is a semiconductor mainly made by using two elements: silicon and germanium, so that semiconductors of N (with negative electrons) and P (with positive electrons) levels coexist on the complementary metal-oxide semiconductor device. A current generated by these two complementary effects can be recorded and interpreted into an image by a processing chip.

The long-focus lens 1 performs imaging mainly by using a refraction principle of a lens. To be specific, object rays pass through the long-focus lens 1 and form a clear image on a focal plane, and the image of the object is recorded by using the photosensitive element 2 located on the focal plane.

The light filter 3 is configured to: filter out an undesired band in the rays, and prevent the photosensitive element 2 from generating false colors or ripples, to improve effective resolution and color reproduction of the photosensitive element 2. For example, the light filter 3 may be an infrared light filter. In embodiments, the light filter 3 is an independent component.

In some other embodiments, a light filter mechanical part may be removed, and instead, surface processing or material processing is performed on at least one optical element of the long-focus lens 1, to implement light filtering. A specific embodiment of a mechanical part or structure configured to implement light filtering is not strictly limited in this application.

The long-focus lens 1 may be an upright lens or a periscope lens. In embodiments, an example in which the long-focus lens 1 is a periscope lens is used for description. When the long-focus lens 1 is a periscope lens, the long-focus lens 1 can be better used in a thin electronic device.

In some embodiments, the long-focus lens 1 includes a first optical element G1 and a second optical element G2, and the second optical element G2 is located on an image side of the first optical element G1. For example, the first optical element G1 includes an incident surface 11, a first reflective surface 12, and an emergent surface 13 that are arranged from an object side to an image side. A convex surface is provided at a paraxial axis of the incident surface 11. The first reflective surface 12 changes a propagation direction of an optical axis from a first direction Z to a second direction X, and the second direction X intersects the first direction Z. For example, the second direction X is perpendicular to the first direction Z. A concave surface is provided at a paraxial axis of the emergent surface 13. The second optical element G2 includes at least one lens. The photosensitive element 2 is located on an image side of the second optical element G2.

For example, the first optical element G1 is a movable structure, the photosensitive element 2 is a fastened structure, and the camera module 302 implements optical image stabilization through movement of the first optical element G1. In an image stabilization process of the camera module 302, the first optical element G1 rotates around the first direction Z and/or rotates around a third direction Y, and the photosensitive element 2 remains fixed. The third direction Y intersects the first direction Z and intersects the second direction X. For example, the third direction Y may be perpendicular to the second direction X and perpendicular to the first direction Z.

In embodiments of this application, the camera module 302 can drive, by using a conventional image stabilization motor, the first optical element G1 to move, and no image stabilization drive mechanism needs to be disposed on the photosensitive element 2. Therefore, costs of an optical image stabilization mechanism of the camera module 302 can be reduced. In addition, the incident surface 11 having a convex surface structure and the emergent surface 13 having a concave surface structure are disposed on the first optical element G1, and the incident surface 11 and the emergent surface 13 move synchronously with the first reflective surface 12. Therefore, in the image stabilization process of the camera module 302, the incident surface 11 can receive light, and the emergent surface 13 can compensate for an aberration, to help reduce a module size of the camera module 302, implement miniaturization of the camera module 302, improve an image stabilization effect of the camera module 302, and improve imaging quality of the camera module 302.

In addition, in a conventional solution in which an image sensor is driven to shift (shift) to implement image stabilization, because an image stabilization drive mechanism needs to be disposed around the image sensor, and the image stabilization drive mechanism has a complex structure and circuit design and needs to occupy large installation space, when a photosensitive element whose sensor diagonal is greater than 10 mm needs to be used, a module size of a camera module is at least 32 mm. However, in embodiments of this application, for a photosensitive element of a same size, because the photosensitive element 2 is a fastened structure, no image stabilization drive mechanism needs to be disposed, and the camera module 302 does not need to reserve installation space of the image stabilization drive mechanism around the photosensitive element 2. Therefore, a module size of the camera module 302 can be reduced, and this facilitates miniaturization of the camera module 302. In some embodiments, the module size may be reduced to less than 31 mm.

In addition, when an overall volume of the camera module 302 is limited, because there is no need to reserve the installation space of the image stabilization drive structure around the photosensitive element 2, arrangement space of the photosensitive element 2 is sufficient, and the photosensitive element 2 with a large photosensitive area can be selected for the camera module 302. This helps implement a large target surface of the camera module 302.

Therefore, the camera module 302 in embodiments of this application can implement long-focus image shooting with a large target surface, low costs, a small size, and high imaging quality.

For example, a semi-sensor diagonal ImgH of the photosensitive element 2 may satisfy the following: 2.5 mm≤ImgH≤8.16 mm. In embodiments of this application, because the photosensitive element 2 has sufficient arrangement space, and the camera module 302 has a small limitation on a size of the photosensitive element 2, a large target surface or a small target surface may be flexibly selected for the photosensitive element 2 based on a requirement. For example, the semi-sensor diagonal ImgH of the photosensitive element 2 may satisfy the following: 4.2 mm≤ImgH≤8.16 mm. For example, the semi-sensor diagonal ImgH of the photosensitive element 2 may be 4.4 mm, 5.11 mm, 6.2 mm, 6.8 mm, 7.3 mm, or the like. Alternatively, the semi-sensor diagonal ImgH of the photosensitive element 2 may satisfy the following: 2.5 mm≤ImgH≤4.0 mm. For example, the semi-sensor diagonal ImgH of the photosensitive element 2 may be 2.8 mm, 3.2 mm, 3.6 mm, 3.8 mm, or the like.

In some embodiments, a focal length F1 of the first optical element G1 and a focal length Fsys of the long-focus lens 1 may satisfy the following: F1/Fsys≥1.2. For example, a value of F1/Fsys may be 1.5, 1.82, 2.17, 2.23, 2.76, 3.19, 7.3, 12.46, 15.66, 18, or the like. In embodiments, a ratio of the focal length of the first optical element G1 to the focal length of the long-focus lens 1 is set to be greater than or equal to 1.2, so that the camera module 302 can have better image definition when implementing image stabilization through movement of the first optical element G1, to obtain better imaging quality.

For example, the focal length F1 of the first optical element G1 and the focal length Fsys of the long-focus lens 1 may satisfy the following: $22.5 \geq F1/Fsys \geq 1.2$. In embodiments, the camera module 302 further limits the ratio F1/Fsys of the focal length F1 of the first optical element G1 to the focal length Fsys of the long-focus lens 1, so that miniaturization can be more easily implemented while ensuring imaging quality. When a value of F1/Fsys is larger, the focal length F1 of the first optical element G1 is larger, and the camera module 302 is more likely to obtain better image definition when implementing image stabilization through movement of the first optical element G1. When the value of F1/Fsys is smaller, the focal length F1 of the first optical element G1 is smaller, and the camera module 302 is more likely to implement miniaturization of the camera module.

In some embodiments, the focal length Fsys of the long-focus lens 1 may satisfy the following: $10 \text{ mm} \leq Fsys \leq 40$ mm. For example, the focal length Fsys of the long-focus lens 1 may be 12 mm, 14.8994 mm, 15 mm, 18.9 mm, 19.7997 mm, 20 mm, 22.5 mm, 24 mm, 28 mm, or the like. The focal length Fsys of the long-focus lens 1 may alternatively satisfy the following: $14 \text{ mm} \leq Fsys \leq 25 \text{ mm}$.

In some embodiments, the focal length F1 of the first optical element G1 satisfies the following: $F1 \leq 380$ mm. For example, the focal length F1 of the first optical element G1 may be 38.5 mm, 41.049 mm, 44.236 mm, 47.5816 mm, 52.2544 mm, 146.05 mm, 180 mm, 210.32 mm, 240 mm, or the like. The focal length F1 of the first optical element G1 may alternatively satisfy the following: $F1 \leq 180$ mm. In embodiments, the camera module 302 limits the value of the focal length F1 of the first optical element G1, to ensure imaging quality and module miniaturization.

In some embodiments, the incident surface 11 of the first optical element G1 may be a spherical surface, to reduce processing difficulty. The emergent surface 13 of the first optical element G1 may be a spherical surface, to reduce processing difficulty. In another embodiment, the incident surface 11 and/or the emergent surface 13 may alternatively be aspheric surfaces.

In some embodiments, a curvature radius L1S1R of the incident surface 11 of the first optical element G1 may satisfy the following: $6 \text{ mm} \leq L1S1R \leq 300 \text{ mm}$. For example, the curvature radius L1S1R of the incident surface 11 may be 9 mm, 12.25 mm, 13.5904 mm, 13.6843 mm, 13.8907 mm, 14.9683 mm, 17.748 mm, 19.5 mm, 21 mm, 38 mm, 100 mm, or the like. A larger curvature radius L1S1R of the incident surface 11 indicates better processing of the incident surface 11, and a smaller curvature radius L1S1R of the incident surface 11 indicates a better light receiving effect of the incident surface 11. In embodiments, a value of the curvature radius L1S1R of the incident surface 11 is limited within a specific range, so that processing difficulty of the incident surface 11 is low, and a light receiving effect is good.

For example, the curvature radius L1S1R of the incident surface 11 of the first optical element G1 may satisfy the following: $6 \text{ mm} \leq L1S1R \leq 23 \text{ mm}$. In embodiments, the incident surface 11 is easy to process and has a good light receiving effect. The curvature radius L1S1R of the incident surface 11 may alternatively satisfy the following: $10 \text{ mm} \leq L1S1R \leq 20$ mm.

In some embodiments, a curvature radius L2S2R of the emergent surface 13 of the first optical element G1 may satisfy the following: $10 \text{ mm} \leq L2S2R \leq 300 \text{ mm}$. For example, the curvature radius L1S1R of the incident surface 11 may be 13.25 mm, 15.8 mm, 17.686 mm, 21.7868 mm, 26.4989 mm, 27.8264 mm, 33.8659 mm, 43.5 mm, 62 mm, 100 mm, or the like. A larger curvature radius L2S2R of the emergent surface 13 indicates better processing of the emergent surface 13, and a smaller curvature radius L2S2R of the emergent surface 13 indicates better aberration compensation implemented by the emergent surface 13. In embodiments, a value of the curvature radius L2S2R of the emergent surface 13 is limited within a specific range, so that processing difficulty of the emergent surface 13 is low, and an aberration compensation effect is good.

For example, the curvature radius L2S2R of the emergent surface 13 of the first optical element G1 may satisfy the following: $15 \text{ mm} \leq L2S2R \leq 300 \text{ mm}$. In embodiments, the emergent surface 13 is easy to process and can better compensate for an aberration. The curvature radius L2S2R of the emergent surface 13 may alternatively satisfy the following: $16 \text{ mm} \leq L2S2R \leq 40 \text{ mm}$.

In some embodiments, the curvature radius L1S1R of the incident surface 11 of the first optical element G1 and the focal length Fsys of the long-focus lens 1 may satisfy the following: $0.4 \leq L1S1R/Fsys \leq 6$. For example, a value of L1S1R/Fsys may be 0.45, 0.56, 0.69, 0.72, 0.73, 0.75, 1.19, 1.28, 2.4, 3, 4.5, or the like. The curvature radius L1S1R of the incident surface 11 and the focal length Fsys of the long-focus lens 1 may alternatively satisfy the following: $0.4 \leq L1S1R/Fsys \leq 1.4$. Alternatively, the curvature radius L1S1R of the incident surface 11 and the focal length Fsys of the long-focus lens 1 may satisfy the following: $0.6 \leq L1S1R/Fsys \leq 1.2$. In embodiments, the camera module 302 limits the value of L1S1R/Fsys, to better balance light receiving performance and optical image stabilization performance.

For example, the curvature radius L2S2R of the emergent surface 13 of the first optical element G1 and the focal length Fsys of the long-focus lens 1 may satisfy the following: $0.4 \leq L2S2R/Fsys \leq 10$. For example, a value of L2S2R/Fsys may be 0.48, 0.76, 0.95, 1.15, 1.32, 1.41, 2.27, 3.8, 4.9, 5.8, or the like. For example, the curvature radius L2S2R of the emergent surface 13 and the focal length Fsys of the long-focus lens 1 may alternatively satisfy the following: $0.9 \leq L2S2R/Fsys \leq 6$. Alternatively, the curvature radius L2S2R of the emergent surface 13 and the focal length Fsys of the long-focus lens 1 may satisfy the following: 1.1≤L2S2R/Fsys≤3. In embodiments, the camera module 302 limits the value of L2S2R/Fsys, to improve imaging quality and optical image stabilization performance.

In some embodiments, as shown in FIG. 3, the first optical element G1 may include a first lens L1 and a second lens L2. The first lens L1 is located on an object side of the first reflective surface 12, and an object side surface of the first lens L1 is the incident surface 11 of the first optical element G1. The second lens L2 is located on an image side of the first reflective surface 12, and an image side surface of the second lens L2 is the emergent surface 13 of the first optical element G1. The first lens L1 and/or the second lens L2 may be processed and molded by using a process like injection molding, mold pressing, or polishing and grinding. The first lens L1 and/or the second lens L2 may be made of a glass material or a plastic material.

For example, the first lens L1 may have a positive focal power, and the first lens L1 can be configured to shrink a beam. For example, the first lens L1 may be a convex lens. In embodiments, a beam entering the long-focus lens 1 starts to shrink after passing through the first lens L1, when reaching the second optical element G2 after being reflected by the first reflective surface 12, the beam has already shrunk through a long optical path, a diameter of the beam is small, and the second optical element G2 is no longer a maximum limitation on a clear aperture of the long-focus lens 1. Therefore, at a specific device thickness, even if a size of the second optical element G2 is limited by the device thickness, the first lens L1 with the positive focal power is disposed on the first optical element G1, so that a clear aperture of the long-focus lens 1 can be effectively increased while a module size is ensured, to implement a wide aperture.

In some embodiments, an F-number of the long-focus lens 1 may be less than or equal to 2.4. For example, the F-number of the long-focus lens 1 may be 1.4, 1.56, 1.66, 2.06, 2.16, 2.24, 2.36, or the like.

A focal length f1 of the first lens L1 and the focal length Fsys of the long-focus lens 1 may satisfy the following: 0.5≤f1/Fsys≤20. For example, a value of f1/Fsys may be 0.8, 1.16, 1.19, 1.41, 1.67, 1.92, 2.8, 3.9, 5.6, or the like. For example, the focal length f1 of the first lens L1 and the focal length Fsys of the long-focus lens 1 may alternatively satisfy the following: 1.1≤L2S2R/Fsys≤1.7, or 1.9≤L2S2R/Fsys≤12. In embodiments, the camera module 302 limits the value of f1/Fsys, to better balance light receiving performance and optical image stabilization performance.

For example, the second lens L2 may have a negative focal power, to better compensate for an aberration and improve imaging quality of the camera module 302. In addition, the second lens L2 can reduce an incident angle of a beam on the second optical element G2, reduce design difficulty of the second optical element G2, and achieve a better imaging effect.

A focal length f2 of the second lens L2 and the focal length Fsys of the long-focus lens 1 may satisfy the following: -20≤f2/Fsys≤0. For example, a value of f2/Fsys may be -8.8, -5.6, -3.67, -2.88, -1.86, -1.51, -1.49, -1.2, -0.8, or the like. For example, the focal length f2 of the second lens L2 and the focal length Fsys of the long-focus lens 1 may alternatively satisfy the following: -12≤f2/Fsys≤-1.48, or -1.2≤L2S2R/Fsys≤-0.5. In embodiments, the camera module 302 limits the value of f2/Fsys, to improve imaging quality and optical image stabilization performance.

In some embodiments, when the camera module 302 is mounted on the electronic device 100, the first direction Z may be parallel to a thickness direction of the electronic device 100, and the second direction X may be parallel to a length direction or a width direction of the electronic device 100. In embodiments of this application, specific orientations of the first direction Z and the second direction X are not strictly limited.

In embodiments, the first reflective surface 12 is disposed on the first optical element G1 of the long-focus lens 1, to change a propagation direction of a ray, so that a propagation direction of a beam in the second optical element G2 may be different from a direction in which the beam enters the electronic device 100. Therefore, a placement position, an angle, space, and the like of the camera module 302 are more flexible, and the long-focus lens 1 can be applied to a periscope camera module 302. In addition, because the first reflective surface 12 implements optical path turning, the module size is compressed, and this facilitates miniaturization of the camera module 302.

In some embodiments, the first optical element G1 may further include a first reflector 1a, and the first reflector 1a includes the first reflective surface 12 of the first optical element G1. For example, the first reflector 1a may be a prism. In this case, one surface of the first reflector 1a forms the first reflective surface 12. For example, the first reflector 1a may include an object side surface, a reflective surface, and an image side surface. The object side surface of the first reflector 1a faces the first lens L1, the image side surface of the first reflector 1a faces the second lens L2, and the reflective surface of the first reflector 1a forms the first reflective surface 12. A ray enters from the object side surface of the first reflector 1a, is reflected on the reflective surface of the first reflector 1a (namely, the first reflective surface 12), and then is emitted from the image side surface of the first reflector 1a. The first reflector 1a may be processed and molded by using a process like injection molding, mold pressing, or polishing and grinding. The first reflector 1a may be made of a glass material or a plastic material.

For example, a refractive index Nd of the first reflector 1a may satisfy the following: Nd≤1.85. For example, the refractive index Nd of the first reflector 1a may be 1.49, 1.54, 1.62, 1.72, or the like. For example, the refractive index Nd of the first reflector 1a may alternatively satisfy the following: Nd≤1.78. In embodiments, a value of the refractive index Nd of the first reflector 1a is limited. Because the refractive index Nd is inversely proportional to an Abbe number, an Abbe number of the first reflector 1a is high. Therefore, the first reflector 1a has high dispersion performance, to ensure that no excessively large residual chromatic aberration is generated, and reduce design difficulty of a lens group located on an image side of the first reflector 1a.

For example, the first reflective surface 12 may be a plane, to have good processability. In some other embodiments, when implementing reflection of a ray, the first reflective surface 12 may further correct an aberration like astigmatism, to further improve image quality or reduce a volume. For example, the first reflective surface 12 may alternatively be a spherical surface, a cylindrical surface, or a free-form surface. The spherical surface may be a convex surface or a concave surface. The cylindrical surface has curvature in one direction and extends in a straight line in the other direction. For example, a highly reflective film may be further disposed on the first reflective surface 12, to improve reflection efficiency, so that rays of a beam are completely or nearly completely reflected and then enter a subsequent optical element.

In embodiments of this application, the incident surface 11, the first reflective surface 12, and the emergent surface 13 of the first optical element G1 maintain an unchanged relative position relationship.

In some embodiments, an image side surface of the first lens L1 is fastened to the object side surface of the first reflector 1a, and an object side surface of the second lens L2 is fastened to the image side surface of the first reflector 1a. The image side surface of the first lens L1 may be a plane, and/or the object side surface of the second lens L2 may be a plane. In this case, after the first optical element G1 is assembled, an assembly structure of the first lens L1 and/or the second lens L2 and the first reflector 1a is compact. This helps implement miniaturization of the camera module 302.

For example, the first lens L1, the first reflector 1a, and the second lens L2 are all made of a glass material, the first lens L1 is glued to the first reflector 1a, and the second lens L2 is glued to the first reflector 1a. In embodiments, both a connection between the first lens L1 and the first reflector 1a and a connection between the second lens L2 and the first reflector 1a are a glued connection between glass. A connection process is stable and reliable, so that an assembly yield of the first optical element G1 is high, and optical performance of the first optical element G1 is better. In some other embodiments, the connection between the first lens L1 and the first reflector 1a and the connection between the second lens L2 and the first reflector 1a may alternatively be implemented by using an embossing process.

In some other embodiments, the first lens L1, the first reflector 1a, and the second lens L2 may alternatively be an integrated mechanical part. In other words, the first optical element G1 may be an integrated special-shaped prism.

In some other embodiments, the first lens L1, the second lens L2, and the first reflector 1a may alternatively be made of different materials. This is not strictly limited in this application. When materials of the first lens L1 and the second lens L2 are different, an aberration can be reduced. The first lens L1 and the second lens L2 may have different temperature characteristics, for example, coefficients of thermal expansion and temperature coefficients of light refractive index, to reduce impact of an ambient temperature.

In some other embodiments, there may also be a gap between the first lens L1 and the object side surface of the first reflector 1a, and/or there may also be a gap between the second lens L2 and the image side surface of the first reflector 1a. In this case, the first lens L1 and/or the second lens L2 may be fastened to the first reflector 1a by using a mechanical part like a lens barrel.

In some other embodiments, the first reflector 1a of the first optical element G1 may alternatively be a mirror. In this case, a mirror surface of the mirror forms the first reflective surface 12. A mechanical part (for example, the first lens L1) that forms the incident surface 11 and a mechanical part (for example, the second lens L2) that forms the emergent surface 13 may be fastened to the first reflector 1a by using a mechanical part like a lens barrel. In this way, relative positions of the incident surface 11, the emergent surface 13, and the reflective surface are unchanged.

In embodiments of this application, the first optical element G1 may include two or three lenses. For example, in embodiments shown in FIG. 3, the first optical element G1 includes two lenses. In some other embodiments, the first optical element G1 may further include a lens that has a negative focal power and that is located on the image side of the first lens L1 and the object side of the first reflective surface 12. The lens and the first lens L1 are used together to form a positive-negative lens cooperation structure, so that an aberration problem like a color difference can be better resolved.

In some embodiments, the second optical element G2 may include at least two lenses, to form at least one lens group. The camera module 302 may implement focusing through movement of one or more lens groups along the optical axis.

In some embodiments, as shown in FIG. 3, the second optical element G2 may include a first lens group G21 and a second lens group G22, the second lens group G22 is located on an image side of the first lens group G21, and the camera module 302 may implement focusing through movement of the first lens group G21 and/or the second lens group G22 along the optical axis.

In embodiments, the second optical element G2 includes two lens groups, and the camera module 302 can implement automatic focusing through movement of at least one of the two lens groups. This helps implement macro image shooting.

For example, the first lens group G21 has a positive focal power, and the second lens group G22 has a negative focal power. In some examples, the first lens group G21 is a movable lens group, the second lens group G22 is a fixed lens group, and the camera module 302 implements focusing through movement of the first lens group G21 along the optical axis. In this case, a focusing stroke of the first lens group G21 is small, and aberration deterioration caused by focusing can be effectively suppressed, so that the camera module 302 has a strong focusing capability, and the camera module 302 has high imaging quality and a strong macro capability. Because the focusing stroke of the first lens group G21 is small, a volume of a motor configured to drive the first lens group G21 to move is reduced, so that the camera module 302 is more easily miniaturized. In addition, the second lens group G22 can function as a flat-field lens, to compensate for a partial curvature of field change caused by focusing. This enhances a focusing capability of the first lens group G21, so that the camera module 302 has a strong focusing capability and higher imaging quality.

In some other embodiments, the first lens group G21 is a fixed lens group, the second lens group G22 is a movable lens group, and the camera module 302 implements focusing through movement of the second lens group G22 along the optical axis.

In some other embodiments, both the first lens group G21 and the second lens group G22 are movable lens groups, and the camera module 302 may implement focusing through movement of the first lens group G21 and the second lens group G22 along the optical axis. In a focusing process, movement directions of the first lens group G21 and the second lens group G22 may be the same or different, and movement distances may be the same or different. In this case, in embodiments, a focusing speed of the camera module 302 is high, a focusing stroke of the lens group is small, and the camera module can implement macro image shooting.

In some embodiments, a focal length F2 of the first lens group G21 and the focal length Fsys of the long-focus lens 1 may satisfy the following: $0.2 \leq F2/Fsys \leq 1$. For example, a value of F2/Fsys may be 0.28 0.38, 0.46, 0.51, 0.53, 0.57, 0.72, 0.8, or the like. For example, the focal length F2 of the first lens group G21 and the focal length Fsys of the long-focus lens 1 may alternatively satisfy the following: $0.3 \leq F2/Fsys \leq 0.6$.

In embodiments, $F2/Fsys \leq 1$ is set, so that the first lens group G21 can implement focusing by moving a small displacement, to reduce a focusing stroke and improve a focusing capability. $0.2 \leq F2/Fsys$ is set, to help control an aberration of a beam passing through the first lens group G21, so that the second lens group G22 is easier to perform aberration correction, and the camera module 302 has better imaging quality. Therefore, a ratio of the focal length F2 of the first lens group G21 to the focal length Fsys of the long-focus lens 1 is appropriately designed, so that the camera module 302 can balance a focusing capability and imaging quality.

For example, a focal length F3 of the second lens group G22 and the focal length Fsys of the long-focus lens 1 may satisfy the following: $-1.5 \leq F3/Fsys \leq -0.2$. For example, a value of F3/Fsys may be -1.2, -1.12 -1, -0.87, -0.44, -0.39, -0.36, -0.34, -0.26, or the like. For example, the focal length F3 of the second lens group G22 and the focal length Fsys of the long-focus lens 1 may alternatively satisfy the following: $-0.9 \leq F3/Fsys \leq -0.3$.

In embodiments, a ratio of the focal length F3 of the second lens group G22 to the focal length Fsys of the long-focus lens 1 is appropriately designed, so that the camera module 302 can reduce an image quality difference between long-shot image shooting and close-up image shooting with low assembly sensitivity, to obtain more uniform image quality. When the assembly sensitivity is low, a deviation (tolerance) range allowed during assembly of the long-focus lens 1 is larger, and assembly is easy.

It may be understood that the foregoing limitations on ranges of the ratios of the focal length F1 of the first optical element G1, the focal length F2 of the first lens group G21, and the focal length F3 of the second lens group G22 to the focal length Fsys of the long-focus lens 1 may exist independently, or may be combined with each other. When the foregoing three ratio ranges are combined with each other, the long-focus lens 1 can obtain a better F-number, a better focusing capability, better imaging quality, and better processability. In some embodiments, the camera module 302 may implement, by using the long-focus lens 1, both long-shot image shooting and macro image shooting within 20 cm, for example, macro image shooting of 10 cm, 5 cm, or 3 cm.

In some embodiments, the first lens group G21 may include three to five lenses, and the second lens group G22 may include one to four lenses. For example, as shown in FIG. 3, the first lens group G21 may include four lenses: a third lens L3, a fourth lens L4, a fifth lens L5, and a sixth lens L6. The second lens group G22 may include two lenses: a seventh lens L7 and an eighth lens L8.

A first lens (for example, the third lens L3) that is of the first lens group G21 and that is closest to the object side may have a positive focal power, so that a beam passing through the first optical element G1 can smoothly enter the first lens group G21, to improve imaging quality of the camera module 302.

A last lens (for example, the eighth lens L8) that is of the second lens group G22 and that is closest to the image side may have a negative focal power, to compensate for an aberration, so as to improve imaging quality of the camera module 302.

For example, the first lens group G21 and/or the second lens group G22 may include at least two lenses of different materials, to have different Abbe numbers, thereby reducing impact of a chromatic aberration on image quality. When a material of one lens is different from a material of another lens in the first lens group G21 and/or the second lens group G22, it may be considered that the first lens group G21 and/or the second lens group G22 include/includes at least two lenses of different materials. The two lenses of different materials may have different temperature characteristics, for example, coefficients of thermal expansion and temperature coefficients of light refractive index, to reduce impact of an ambient temperature. For example, the two lenses of different materials may be made of glass and plastic respectively.

In some other embodiments, the camera module 302 may alternatively implement focusing through movement of the second optical element G2 along the optical axis. In this case, the plurality of lenses of the second optical element G2 form one lens group. In embodiments, an optical path design and a structure design of the camera module 302 are simple and easy to implement, and the camera module 302 has good processability.

For example, the second optical element G2 has a positive focal power. The second optical element G2 may include three to six lenses. In some embodiments, a first lens that is of the second optical element G2 and that is closest to the object side may have a positive focal power, and a last lens that is of the second optical element G2 and that is closest to the image side may have a negative focal power. In this case, an optical path design of the camera module 302 is simple, and imaging quality is high.

In some other embodiments, the second optical element G2 may alternatively include three or more lens groups.

In some embodiments, as shown in FIG. 3, the long-focus lens 1 may further include a third optical element G3, and the third optical element G3 includes a second reflective surface 14. The second reflective surface 14 is located on the image side of the second optical element G2, the second reflective surface 14 changes the propagation direction of the optical axis from the second direction X to a fourth direction Z', and the fourth direction Z' intersects the second direction X. Because the second reflective surface 14 can change a propagation direction of an optical path and compress a size, miniaturization of the camera module 302 is facilitated.

The fourth direction Z' may be perpendicular to the second direction X. For example, the fourth direction Z' may be parallel to the first direction Z, to be parallel to the thickness direction of the electronic device 100. In this case, an arrangement plane of the photosensitive element 2 may be perpendicular to the thickness direction of the electronic device 100, and a size of a target surface is not limited by a size in the thickness direction of the electronic device 100. This facilitates a large target surface design of the camera module 302. In another embodiment, the fourth direction Z' may alternatively be located in another orientation. A specific orientation of the fourth direction Z' is not strictly limited in embodiments of this application.

In embodiments, an optical axis O includes a first part O1 from the object side surface of the first lens L1 to the first reflective surface 12, a second part O2 from the first reflective surface 12 to the second reflective surface 14, and a third part O3 from the second reflective surface 14 to the photosensitive element 2. In a focusing process of the camera module 302, the first optical element G1 and the third optical element G3 remain fastened, and a part or an entirety of the second optical element G2 moves along the second part O2 of the optical axis O, to implement focusing. Because none of the first part O1, the second part O2, and the third part O3 of the optical axis O changes in the focusing process, and a thickness of an optical system of the long-focus lens 1 is a sum of a size of the first part O1 of the optical axis O and a size of the third part O3 of the optical axis O, a focusing stroke of the long-focus lens 1 does not cause an increase in the thickness of the optical system. This facilitates miniaturization of the long-focus lens 1 and the camera module 302.

For example, the second reflective surface 14 may be a plane, to have good processability. In some other embodiments, when implementing reflection of a ray, the second reflective surface 14 may further correct an aberration like astigmatism, to further improve image quality or reduce a volume. For example, the second reflective surface 14 may alternatively be a spherical surface, a cylindrical surface, or a free-form surface. The spherical surface may be a convex surface or a concave surface. The cylindrical surface has curvature in one direction and extends in a straight line in the other direction. For example, a highly reflective film may be further disposed on the second reflective surface 14, to improve reflection efficiency, so that rays of a beam are completely or nearly completely reflected and then enter a subsequent optical element.

For example, the third optical element G3 may include a second reflector 1b, the second reflector 1b includes the second reflective surface 14, and the second reflector 1b may be a prism or a mirror. When the second reflector 1b is a prism, a refractive index of the second reflector 1b may be different from or the same as a refractive index of the first reflector 1a.

In some other embodiments, the third optical element G3 may further include at least one lens, for example, one or two lenses, to further adjust an optical path and improve imaging quality of the camera module 302.

In some other embodiments, the long-focus lens 1 may not include the third optical element G3. In this case, a beam enters the photosensitive element 2 in the second direction X, and the arrangement plane of the photosensitive element 2 is perpendicular to the second direction X.

In some embodiments, a total track length TTL of the long-focus lens 1 and the focal length Fsys of the long-focus lens 1 may satisfy the following: $0.8 \leq TTL/Fsys \leq 3$. For example, a value of TTL/Fsys may be 1.0, 1.29, 1.35, 1.43, 1.51, 1.8, 2.4, or the like.

In embodiments, a ratio of the total track length TTL of the long-focus lens 1 to the focal length Fsys of the long-focus lens 1 is limited, so that the long-focus lens 1 satisfies both a long-focus image shooting requirement and a short total length requirement, and a thickness of the long-focus lens 1 is thin. This helps implement miniaturization of the camera module 302.

For example, the total track length TTL of the long-focus lens 1 may satisfy the following: $15\,mm \leq TTL \leq 50\,mm$. For

example, a value of the total track length TTL may be 22 mm, 24.46 mm, 26.8042 mm, 27.0324 mm, 27.083 mm, 29.908 mm, 35 mm, 40 mm, or the like. For example, the total track length TTL of the long-focus lens 1 may alternatively satisfy the following: 15 mm≤TTL≤30 mm.

In some embodiments, a field of view of the long-focus lens 1 is less than or equal to 40°. For example, the field of view of the long-focus lens 1 may be 30°, 32°, 35°, 38°, or the like. In embodiments, the field of view of the long-focus lens 1 is limited, so that the camera module 302 can better implement long-focus image shooting, have better optical image stabilization performance, and have better imaging quality.

In some embodiments, an optical surface of at least one lens of the long-focus lens 1 is an aspheric surface, and the optical surface of an aspheric shape has different focal powers from a paraxial axis to an outer field of view region, so that an imaging picture has more balanced image quality. In addition/Alternatively, the optical surface of the at least one lens of the long-focus lens 1 may be a free-form surface, to correct an aberration. The aspheric surface is a surface that is rotationally symmetric around the optical axis O. The free-form surface may have no symmetry axis, or may be symmetric in one direction, or may be symmetric in two directions.

In some embodiments, the plurality of lenses of the long-focus lens 1 are assembled by using an active alignment (active alignment, AA) process, to ensure assembly precision.

In some embodiments, the long-focus lens 1 further includes an aperture diaphragm (not shown in the figure). For example, the aperture diaphragm may be mounted on the second optical element G2. In this case, an aperture adjustment effect of the aperture diaphragm is better, and imaging quality of the long-focus lens 1 can be improved. For example, the aperture diaphragm may be mounted on the object side of the first lens group G21. In other words, the aperture diaphragm is mounted between the second lens L2 and the third lens L3. In some other embodiments, the aperture diaphragm may alternatively be mounted at another position of the long-focus lens 1. This is not strictly limited in embodiments of this application.

The aperture diaphragm may be of an isolated ring structure or a variable blade structure, or the aperture diaphragm may be implemented by using a surface spraying process, for example, the aperture diaphragm is formed by spraying a light shielding material on a lens. A position of the aperture diaphragm may be fastened or may be variable. For example, the position of the aperture diaphragm is variable, and the position of the aperture diaphragm may be adjusted based on a focusing case, to be located between different lenses.

In some embodiments, a special-shape technology may be used for at least one lens of the long-focus lens 1, to reduce the size of the long-focus lens 1. For example, at least one lens in the second lens L2 or the second optical element G2 may have a notch for reducing a height of the lens. The notch may be implemented by using an I-CUT process. The notch for reducing the height of the lens is provided in the at least one lens in the second lens L2 or the second optical element G2, so that a size of the long-focus lens 1 in a height direction can be effectively reduced, the long-focus lens 1 can be better applied to a miniaturized electronic device 100, and an application scope of the long-focus lens 1 is expanded. In addition, because the height of the lens decreases in a notch manner, a large clear aperture may be set for the lens, so that an amount of light admitted through the long-focus lens 1 is increased, and imaging quality of the long-focus lens 1 is better. Alternatively, the special-shape technology may be used on a structural support of a lens like a lens barrel or a partition, to reduce the size of the long-focus lens 1.

In some embodiments, a peripheral side surface or a supporting surface of at least one lens of the long-focus lens 1 may be blackened or roughened, to eliminate stray light and improve imaging quality. The blackening may be coating or plating black ink or another extinction material, or may be bonding a film. The roughening is mainly used to increase roughness. Certainly, in some other embodiments, the long-focus lens 1 may eliminate stray light in another manner. This is not strictly limited in embodiments of this application.

In some embodiments, materials used by different lenses of the long-focus lens 1 may have different temperature characteristics, for example, glass and plastic are separately used, to reduce impact of an ambient temperature.

In some embodiments, a diffraction structure (not shown in the figure) may be formed on an optical surface of at least one lens of the long-focus lens 1. In embodiments, the diffraction structure is appropriately disposed, so that a chromatic aberration can be reduced, and a volume of the long-focus lens 1 can be reduced.

In some embodiments, the long-focus lens 1 may further include a liquid lens (not shown in the figure). For example, the liquid lens may be located between the first optical element G1 and the second optical element G2. In embodiments, a focus adjustment effect can be enhanced by using the liquid lens, to implement ultra-macro image shooting. The liquid lens is a mechanical part that uses liquid as a lens and changes a focal length by changing a curvature of the liquid.

Based on data and a simulation result, the following presents a specific solution of the camera module 302 shown in FIG. 3 in a possible embodiment.

Refer to Table 1a and Table 1b together. Table 1a shows a curvature radius (R), an interval (D), a refractive index (Nd), and an Abbe number of each lens, reflector, and light filter when the camera module 302 shown in FIG. 3 focuses on a long shot in a possible embodiment. The interval includes thicknesses of structures and a spacing between the structures. Table 1b shows aspheric coefficients of the lenses of the long-focus lens 1 shown in FIG. 3 in a possible embodiment.

Table 1a

| Surface number | Description | Surface type | Curvature radius | Interval | Refractive index | Abbe number |
|---|---|---|---|---|---|---|
| 1 | L1 | Spherical surface | 13.6843 | 1.5307 | 1.49 | 70.44 |
| 2 | First reflector 1a | Spherical surface | Infinity | 8.5385 | 1.49 | 70.44 |
| 3 | L2 | Spherical surface | Infinity | 0.5 | 1.49 | 70.44 |
| 4 | | Spherical surface | 27.8264 | 2.7 (variable) | | |
| STO | Aperture diaphragm | | | | | |
| 5 | L3 | Aspherical surface | 6.3701 | 1.4283 | 1.54 | 56.02 |
| 6 | | Aspherical surface | 58.7886 | 0.2 | | |
| 7 | L4 | Aspherical surface | -9.1691 | 0.4257 | 1.67 | 19.24 |
| 8 | | Aspherical surface | -395.8765 | 0.3907 | | |
| 9 | L5 | Aspherical surface | 5.0693 | 0.7293 | 1.54 | 56.02 |
| 10 | | Aspherical surface | 6.8727 | 0.2475 | | |
| 11 | L6 | Aspherical surface | -44.2541 | 1.1640 | 1.65 | 21.48 |
| 12 | | Aspherical surface | -6.6407 | 0.5 (variable) | | |
| 13 | L7 | Aspherical surface | -10.5610 | 0.4196 | 1.62 | 25.78 |
| 14 | | Aspherical surface | -65.6502 | 1.4289 | | |
| 15 | L8 | Aspherical surface | -50.1815 | 1.5610 | 1.54 | 55.73 |
| 16 | | Aspherical surface | 7.9134 | 0.3739 | | |
| 17 | Second reflector 1b | Spherical surface | Infinity | 7 | 1.8042 | 46.5 |
| 18 | | Spherical surface | Infinity | 0.3 | | |
| 19 | Light filter | Spherical surface | Infinity | 0.11 | 1.5125 | 55.707 |
| 20 | | Spherical surface | Infinity | 0.36 | | |
| 21 | Imaging surface | Spherical surface | Infinity | 0 | | |

Table 1b

| Surface number | A4 | A6 | A8 | A10 |
|---|---|---|---|---|
| 5 | -3.58E-03 | -3.20E-04 | 2.96E-05 | -8.88E-07 |
| 6 | -5.32E-04 | -2.09E-04 | -2.66E-05 | 2.37E-06 |
| 7 | -2.81E-03 | -1.70E-04 | -4.99E-05 | 3.89E-06 |
| 8 | -1.56E-03 | -3.00E-04 | 1.24E-05 | 5.46E-08 |
| 9 | 4.69E-03 | 3.10E-04 | -6.40E-05 | 2.46E-06 |
| 10 | 2.96E-03 | -1.92E-05 | -4.16E-05 | 2.05E-06 |
| 11 | 2.88E-03 | -3.22E-04 | 2.80E-05 | -3.27E-07 |
| 12 | 1.24E-03 | -5.56E-05 | 3.11E-05 | 3.59E-07 |
| 13 | 1.79E-02 | -1.36E-03 | 8.12E-05 | -5.55E-06 |
| 14 | 1.63E-02 | -1.02E-03 | 1.23E-05 | -3.74E-06 |
| 15 | -4.57E-03 | -1.76E-04 | -8.65E-06 | -6.36E-06 |
| 16 | -3.47E-03 | 1.52E-04 | -1.74E-05 | 5.42E-07 |

The aspheric surface of the long-focus lens 1 in Table 1a may be defined by using, but not limited to, the following aspheric curve equation:

$$z = \frac{cr^2}{1 + \sqrt{1 - (1+k)c^2r^2}} + \sum_{i=1}^{N} \alpha_i r^{2i}$$

Herein, z is a relative distance between a point that is on the aspheric surface and whose distance from the optical axis is r and an intersecting tangent plane tangent to the optical axis of the aspheric surface; r is a vertical distance between a point on an aspheric curve and the optical axis; c is a curvature; k is a cone coefficient, and is 0; and $\alpha_i$ is an ith-order aspheric coefficient. For details, refer to Table 1b.

Table 1c shows basic parameters of the camera module 302 shown in FIG. 3 in a possible embodiment. In Table 1c, ImgH is a semi-sensor diagonal of a photosensitive element 2, Fsys is a focal length of the long-focus lens 1, f1 is a focal length of a first lens L1, f2 is a focal length of a second lens L2, F1 is a focal length of a first optical element G1, F2 is a focal length of a first lens group G21 of a second optical element G2, F3 is a focal length of a second lens group G22 of the second optical element G2, and TTL is a total track length of the long-focus lens 1.

Table 1c

| Parameter (mm) | ImgH | F-number | Fsys | f1 | f2 | F1 | F2 | F3 | TTL |
|---|---|---|---|---|---|---|---|---|---|
| Value | 5.11 | 2.06 | 19.7997 | 27.998 | -56.93 | 44.236 | 9.1324 | -7.21 | 29.908 |

In this embodiment, the camera module 302 includes the long-focus lens 1, a light filter, and the photosensitive element 2 that are arranged from an object side to an image side. The long-focus lens 1 includes the first optical element G1, the second optical element G2, and a third optical element G3 that are arranged from the object side to the image side. The first optical element G1 includes the first lens L1, a first reflector 1a, and the second lens L2 that are arranged from the object side to the image side. An incident surface 11 of the first optical element G1 is formed on an object side surface of the first lens L1, and a convex surface is provided at a paraxial axis of the incident surface 11. The first reflector 1a includes a first reflective surface 12, the first reflective surface 12 is configured to change a propagation direction of an optical axis, and the first reflector 1a is a prism. An emergent surface 13 of the second optical element G2 is formed on an image side surface of the second lens L2, and a concave surface is provided at a paraxial axis of the emergent surface 13.

The second optical element G2 includes the first lens group G21 and the second lens group G22 located on an image side of the first lens group G21. The first lens group G21 includes a third lens L3, a fourth lens L4, a fifth lens L5, and a sixth lens L6 that are arranged from the object side to the image side. The second lens group G22 includes a seventh lens L7 and an eighth lens L8 located on an image side of the seventh lens L7. The third optical element G3 includes a second reflector 1b, the second reflector 1b includes a second reflective surface 14, the second reflective surface 14 is configured to change the propagation direction of the optical axis, and the second reflector 1b is a prism.

In an image stabilization process of the camera module 302, the first optical element G1 moves, and the photosensitive element 2 remains fixed. In this case, the camera module 302 can drive, by using a conventional image stabilization motor, the first optical element G1 to move, and no image stabilization drive mechanism needs to be disposed on the photosensitive element 2. Therefore, costs of an optical image stabilization mechanism of the camera module 302 can be reduced. In addition, the incident surface 11 having a convex surface structure and the emergent surface 13 having a concave surface structure are disposed on the first optical element G1, and the incident surface 11 and the emergent surface 13 move synchronously with a reflective surface. Therefore, in the image stabilization process of the camera module 302, the incident surface 11 can receive light, and the emergent surface 13 can compensate for an aberration, to help reduce a module size of the camera module 302, implement miniaturization of the camera module 302, improve an image stabilization effect of the camera module 302, and improve imaging quality of the camera module 302.

A ratio of the focal length F1 of the first optical element G1 to the focal length Fsys of the long-focus lens 1 is as follows: F1/Fsys=2.23. A ratio of a curvature radius L1S1R of the incident surface 11 of the first optical element G1 to the focal length Fsys of the long-focus lens 1 is as follows: L1S1R/Fsys=0.69. A ratio of a curvature radius L2S2R of the emergent surface 13 of the first optical element G1 to the focal length Fsys of the long-focus lens 1 is as follows: L2S2R/Fsys=1.41.

A ratio of the focal length f1 of the first lens L1 to the focal length Fsys of the long-focus lens 1 is as follows: f1/Fsys=1.41. A ratio of the focal length f2 of the second lens L2 to the focal length Fsys of the long-focus lens 1 is as follows: f2/Fsys=-2.88.

The first lens group G21 is a movable lens group, and the second lens group G22 is a fixed lens group. In a focusing process of the camera module 302, the first lens group G21 moves along the optical axis. A ratio of the focal length F2 of the first lens group G21 to the focal length Fsys of the long-focus lens 1 is as follows: F2/Fsys=0.46. A ratio of the focal length F3 of the second lens group G22 to the focal length Fsys of the long-focus lens 1 is as follows: F3/Fsys=-0.36. A focusing stroke of the first lens group G21 may be approximately 2.2 mm. The camera module 302 may implement macro image shooting, for example, may implement macro image shooting of 50 mm.

A ratio of the total track length TTL of the long-focus lens 1 to the focal length Fsys of the long-focus lens 1 is as follows: TTL/Fsys=1.51.

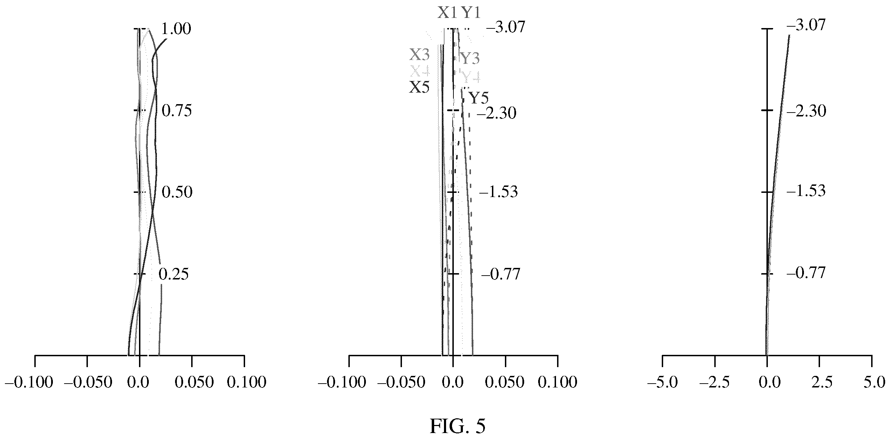

FIG. 5 is a diagram of a simulation effect of the camera module 302 shown in FIG. 3 in a possible embodiment.

FIG. 5 includes an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A physical meaning of the curves is a deviation of light of a corresponding wavelength emitted from a 0-degree field of view from an ideal image point after passing through an optical system. A horizontal coordinate of the curve diagram is a deviation value along an optical axis direction, and a vertical coordinate of the curve diagram is a normalized coordinate at a pupil. The values shown in FIG. 5 are all small, and an axial aberration (a spherical aberration, a chromatic aberration, or the like) of the long-focus lens 1 is well corrected. The astigmatic curvature of field diagram shows deviations of convergence points of pencils in different fields of view from an ideal imaging plane. X is a beam in a sagittal direction, and Y is a beam in a meridian direction. A horizontal coordinate of the diagram is a deviation value along the optical axis direction, and a vertical coordinate of the diagram is a corresponding field of view. When a value of a field of view is excessively large, image quality of the field of view is poor or a high-order aberration exists. As shown in FIG. 5, curvatures of field in the two directions are small, and the system has a good depth of focus. The distortion diagram is used to represent relative deviations of convergence points of beams in different fields of view (actual image heights) from an ideal image height. As shown in FIG. 5, the relative deviations are all within 2.5%. This can ensure that there is no clear deformation in a picture.

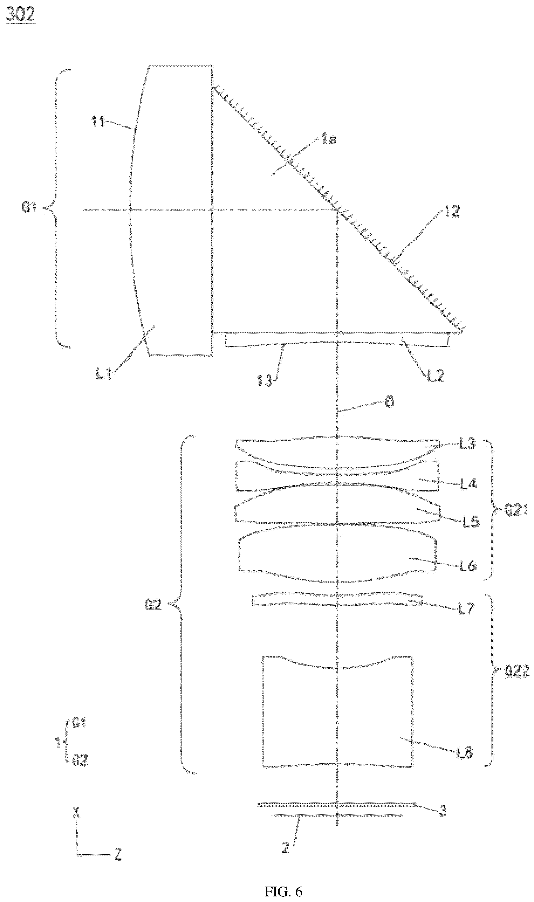

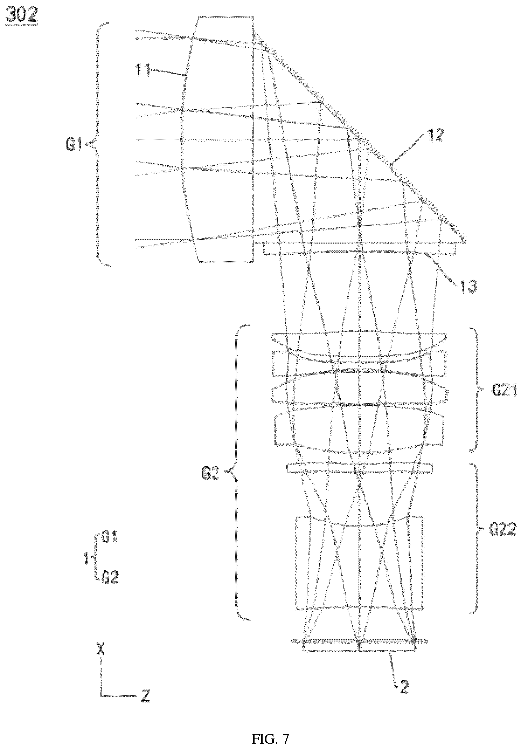

FIG. 6 is a diagram of a partial structure of the camera module 302 shown in FIG. 2 in some other embodiments. FIG. 7 is a diagram of an optical path structure of the camera module 302 shown in FIG. 6 in some usage statuses. The camera module 302 shown in FIG. 6 includes most technical features of the camera module 302 shown in FIG. 3. The following mainly describes differences between the two, and most content that is the same between the two is not described again.

In some embodiments, the camera module 302 includes a long-focus lens 1, a light filter, and a photosensitive element 2 that are arranged from an object side to an image side, and the long-focus lens 1 includes a first optical element G1 and a second optical element G2 that are arranged from the object side to the image side. The first optical element G1 includes a first lens L1, a first reflector 1a, and a second lens L2 that are arranged from the object side to the image side. An incident surface 11 of the first optical element G1 is formed on an object side surface of the first lens L1, and a convex surface is provided at a paraxial axis of the incident surface 11. The first reflector 1a includes a first reflective surface 12, the first reflective surface 12 is configured to change a propagation direction of an optical axis, and the first reflector 1a is a prism. An emergent surface 13 of the second optical element G2 is formed on an image side surface of the second lens L2, and a concave surface is provided at a paraxial axis of the emergent surface 13. In an image stabilization process of the camera module 302, the first optical element G1 moves, and the photosensitive element 2 remains fixed.

The second optical element G2 includes a first lens group G21 and a second lens group G22 located on an image side of the first lens group G21. The first lens group G21 includes a third lens L3, a fourth lens L4, a fifth lens L5, and a sixth lens L6 that are arranged from the object side to the image side. The second lens group G22 includes a seventh lens L7 and an eighth lens L8 located on an image side of the seventh lens L7. The first lens group G21 is a movable lens group, and the second lens group G22 is a fixed lens group. In a focusing process of the camera module 302, the first lens group G21 moves along the optical axis.

An optical axis O includes a first part from the object side surface of the first lens L1 to the first reflective surface 12 and a second part from the first reflective surface 12 to the photosensitive element 2.

Based on data and a simulation result, the following presents a specific solution of the long-focus lens 1 shown in FIG. 6 in a possible embodiment.

Refer to Table 2a and Table 2b together. Table 2a shows a curvature radius (R), an interval (D), a refractive index (Nd), and an Abbe number of each lens, reflector, and light filter when the camera module 302 shown in FIG. 6 focuses on a long shot in a possible embodiment. The interval includes thicknesses of structures and a spacing between the structures. Table 2b shows aspheric coefficients of the lenses of the long-focus lens 1 shown in FIG. 6 in a possible embodiment.

Table 2a

| Surface number | Description | Surface type | Curvature radius | Interval | Refractive index | Abbe number |
|---|---|---|---|---|---|---|
| 1 | L1 | Spherical surface | 17.7482 | 2.7 | 1.62 | 63.39 |

(continued)

| Surface number | Description | Surface type | Curvature radius | Interval | Refractive index | Abbe number |
|---|---|---|---|---|---|---|
| 2 | First reflector 1a | Spherical surface | Infinity | 8.1240 | 1.62 | 63.39 |
| 3 | L2 | Spherical surface | Infinity | 0.32 | 1.62 | 63.39 |
| 4 | | Spherical surface | 33.8659 | 3.1314 | | |
| STO | Aperture diaphragm | | | | | |
| 5 | L3 | Aspherical surface | 9.8262 | 1.0364 | 1.54 | 56.02 |
| 6 | | Aspherical surface | -15.0354 | 0.2043 | | |
| 7 | L4 | Aspherical surface | -28.2310 | 0.2638 | 1.67 | 19.24 |
| 8 | | Aspherical surface | 8.5474 | 0.0818 | | |
| 9 | L5 | Aspherical surface | 20.8563 | 1.2813 | 1.54 | 55.73 |
| 10 | | Aspherical surface | -31.9381 | 0.04 | | |
| 11 | L6 | Aspherical surface | 21.5641 | 1.8941 | 1.61 | 25.70 |
| 12 | | Aspherical surface | -7.2217 | 0.4501 | | |
| 13 | L7 | Aspherical surface | -6.9960 | 0.3260 | 1.65 | 21.45 |
| 14 | | Aspherical surface | -8.4858 | 2.0848 | | |
| 15 | L8 | Aspherical surface | -5.4402 | 3.1566 | 1.54 | 56.02 |
| 16 | | Aspherical surface | 13.8118 | 1.2996 | | |
| 17 | Light filter | Spherical surface | Infinity | 0.11 | 1.52 | 64.19 |
| 18 | | Spherical surface | Infinity | 0.3 | | |
| 19 | Imaging surface | Spherical surface | Infinity | 0 | | |

Table 2b

| Surface number | A4 | A6 | A8 | A10 |
|---|---|---|---|---|
| 5 | -3.58E-03 | -3.20E-04 | 2.96E-05 | -8.88E-07 |
| 6 | -5.32E-04 | -2.09E-04 | -2.66E-05 | 2.37E-06 |
| 7 | -2.81E-03 | -1.70E-04 | -4.99E-05 | 3.89E-06 |
| 8 | -1.56E-03 | -3.00E-04 | 1.24E-05 | 5.46E-08 |
| 9 | 4.69E-03 | 3.10E-04 | -6.40E-05 | 2.46E-06 |
| 10 | 2.96E-03 | -1.92E-05 | -4.16E-05 | 2.05E-06 |
| 11 | 2.88E-03 | -3.22E-04 | 2.80E-05 | -3.27E-07 |
| 12 | 1.24E-03 | -5.56E-05 | 3.11E-05 | 3.59E-07 |
| 13 | 1.79E-02 | -1.36E-03 | 8.12E-05 | -5.55E-06 |
| 14 | 1.63E-02 | -1.02E-03 | 1.23E-05 | -3.74E-06 |
| 15 | -4.57E-03 | -1.76E-04 | -8.65E-06 | -6.36E-06 |
| 16 | -3.47E-03 | 1.52E-04 | -1.74E-05 | 5.42E-07 |

The aspheric surface of the long-focus lens 1 in Table 2a may be defined by using, but not limited to, the following aspheric curve equation:

$$z = \frac{cr^2}{1+\sqrt{1-(1+k)c^2r^2}} + \sum_{i=1}^{N}\alpha_i r^{2i}$$

Herein, z is a relative distance between a point that is on the aspheric surface and whose distance from the optical axis is r and an intersecting tangent plane tangent to the optical axis of the aspheric surface; r is a vertical distance between a point on an aspheric curve and the optical axis; c is a curvature; k is a cone coefficient, and is 0; and $\alpha_i$ is an $i^{\text{th}}$-order aspheric coefficient. For details, refer to Table 2b.

Table 2c shows basic parameters of the camera module 302 shown in FIG. 6 in a possible embodiment. In Table 2c, ImgH is a semi-sensor diagonal of a photosensitive element 2, Fsys is a focal length of the long-focus lens 1, f1 is a focal length of a first lens L1, f2 is a focal length of a second lens L2, F1 is a focal length of a first optical element G1, F2 is a focal length of a first lens group G21 of a second optical element G2, F3 is a focal length of a second lens group G22 of the second optical element G2, and TTL is a total track length of the long-focus lens 1.

Table 2c

| Parameter (mm) | ImgH | F-number | Fsys | f1 | f2 | F1 | F2 | F3 | TTL |
|---|---|---|---|---|---|---|---|---|---|
| Value | 3.6 | 1.66 | 14.8994 | 28.6363 | -54.64 | 47.5816 | 7.5559 | -5.8251 | 26.8042 |

In this embodiment, a ratio of the focal length F1 of the first optical element G1 to the focal length Fsys of the long-focus lens 1 is as follows: F1/Fsys=3.19; a ratio of a curvature radius L1S1R of an incident surface 11 of the first optical element G1 to the focal length Fsys of the long-focus lens 1 is as follows: L1S1R/Fsys=1.19; and a ratio of a curvature radius L2S2R of an emergent surface 13 of the first optical element G1 to the focal length Fsys of the long-focus lens 1 is as follows: L2S2R/Fsys=2.27.

A ratio of the focal length f1 of the first lens L1 to the focal length Fsys of the long-focus lens 1 is as follows: f1/Fsys=1.92. A ratio of the focal length f2 of the second lens L2 to the focal length Fsys of the long-focus lens 1 is as follows: f2/Fsys=-3.67.

A ratio of the focal length F2 of the first lens group G21 to the focal length Fsys of the long-focus lens 1 is as follows: F2/Fsys=0.51. A ratio of the focal length F3 of the second lens group G22 to the focal length Fsys of the long-focus lens 1 is as follows: F3/Fsys=-0.39. A focusing stroke of the first lens group G21 may be approximately 2.5 mm. The camera module 302 may implement macro image shooting, for example, may implement macro image shooting of 30 mm.

A ratio of the total track length TTL of the long-focus lens 1 to the focal length Fsys of the long-focus lens 1 is as follows: TTL/Fsys=1.8.

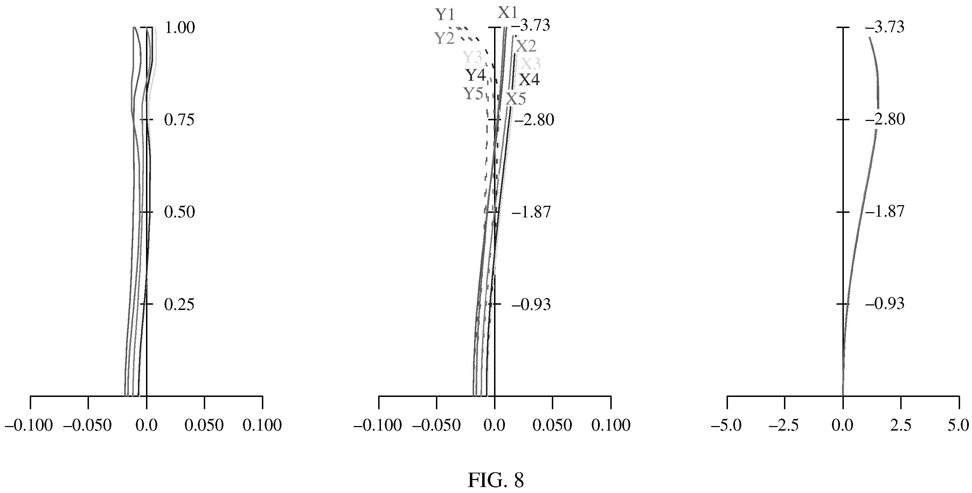

FIG. 8 is a diagram of a simulation effect of the camera module 302 shown in FIG. 6 in a possible embodiment.

FIG. 8 includes an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A horizontal coordinate of the curve diagram is a deviation value along an optical axis direction, and a vertical coordinate of the curve diagram is a normalized coordinate at a pupil. The values shown in FIG. 8 are all small, and an axial aberration (a spherical aberration, a chromatic aberration, or the like) of the long-focus lens 1 is well corrected. The astigmatic curvature of field diagram shows deviations of convergence points of pencils in different fields of view from an ideal imaging plane. X is a beam in a sagittal direction, and Y is a beam in a meridian direction. A horizontal coordinate of the diagram is a deviation value along the optical axis direction, and a vertical coordinate of the diagram is a corresponding field of view. When a value of a field of view is excessively large, image quality of the field of view is poor or a high-order aberration exists. As shown in FIG. 8, curvatures of field in the two directions are small, and the system has a good depth of focus. The distortion diagram is used to represent relative deviations of convergence points of beams in different fields of view (actual image heights) from an ideal image height. As shown in FIG. 8, the relative deviations are all within 2.5%. This can ensure that there is no clear deformation in a picture.

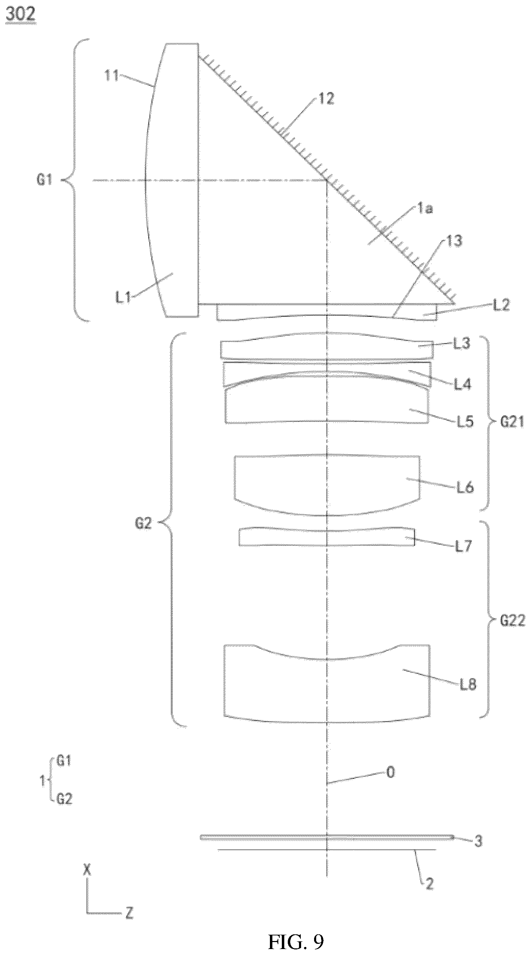

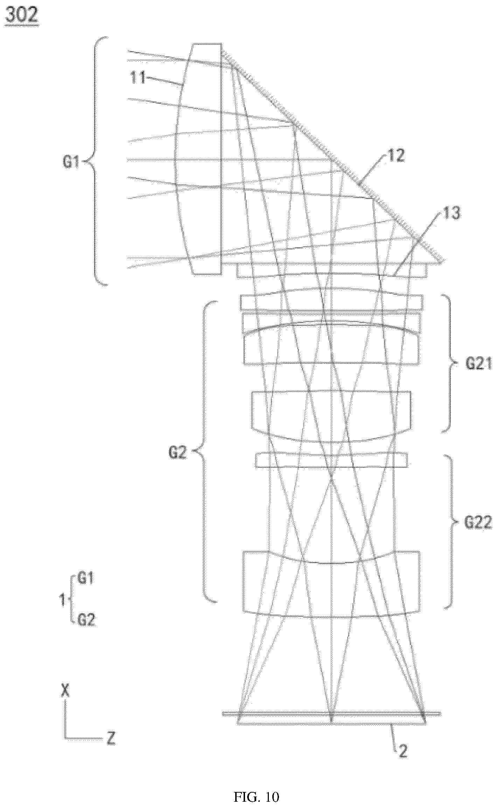

FIG. 9 is a diagram of a partial structure of the camera module 302 shown in FIG. 2 in some other embodiments. FIG. 10 is a diagram of an optical path structure of the camera module 302 shown in FIG. 9 in some usage statuses. The camera module 302 shown in FIG. 9 includes most technical features of the camera module 302 shown in FIG. 6. The following mainly describes differences between the two, and most content that is the same between the two is not described again.

In some embodiments, the camera module 302 includes a long-focus lens 1, a light filter, and a photosensitive element 2 that are arranged from an object side to an image side, and the long-focus lens 1 includes a first optical element G1 and a second optical element G2 that are arranged from the object side to the image side. The first optical element G1 includes a first lens L1, a first reflector 1a, and a second lens L2 that are arranged from the object side to the image side. An incident surface 11 of the first optical element G1 is formed on an object side surface of the first lens L1, and a convex surface is provided at a paraxial axis of the incident surface 11. The first reflector 1a includes a first reflective surface 12, the first reflective surface 12 is configured to change a propagation direction of an optical axis, and the first reflector 1a is a prism. An emergent surface 13 of the second optical element G2 is formed on an image side surface of the second lens L2, and a concave surface is provided at a paraxial axis of the emergent surface 13. In an image stabilization process of the camera module 302, the first optical element G1 moves, and the photosensitive element 2 remains fixed.

The second optical element G2 includes a first lens group G21 and a second lens group G22 located on an image side of the first lens group G21. The first lens group G21 includes a third lens L3, a fourth lens L4, a fifth lens L5, and a sixth lens L6 that are arranged from the object side to the image side. The second lens group G22 includes a seventh lens L7 and an eighth lens L8 located on an image side of the seventh lens L7. The first lens group G21 is a fixed lens group, and the second lens group G22 is a movable lens group. In a focusing process of the camera module 302, the second lens group G22 moves along the optical axis.

An optical axis O includes a first part from the object side surface of the first lens L1 to the first reflective surface 12 and a second part from the first reflective surface 12 to the photosensitive element 2.

Based on data and a simulation result, the following presents a specific solution of the long-focus lens 1 shown in FIG. 9 in a possible embodiment.

Refer to Table 3a and Table 3b together. Table 3a shows a curvature radius (R), an interval (D), a refractive index (Nd), and an Abbe number of each lens, reflector, and light filter when the camera module 302 shown in FIG. 9 focuses on a long shot in a possible embodiment. The interval includes thicknesses of structures and a spacing between the structures. Table 3b shows aspheric coefficients of the lenses of the long-focus lens 1 shown in FIG. 9 in a possible embodiment.

Table 3a

| Surface number | Description | Surface type | Curvature radius | Interval | Refractive index | Abbe number |
|---|---|---|---|---|---|---|
| 1 | L1 | Spherical surface | 13.5904 | 1.5 | 1.62 | 63.39 |
| 2 | First reflector 1a | Spherical surface | Infinity | 7.1749 | 1.62 | 63.39 |
| 3 | L2 | Spherical surface | Infinity | 0.32 | 1.62 | 63.39 |
| 4 | | Spherical surface | 21.7868 | 0.5089 | | |
| STO | Aperture diaphragm | | | | | |
| 5 | L3 | Aspherical surface | 9.2809 | 0.7722 | 1.77 | 49.24 |
| 6 | | Aspherical surface | -283.8411 | 0.1220 | | |
| 7 | L4 | Aspherical surface | -65.1530 | 0.23 | 1.67 | 19.24 |
| 8 | | Aspherical surface | 9.9037 | 0.1419 | | |
| 9 | L5 | Aspherical surface | 125.3717 | 1.2900 | 1.54 | 55.73 |
| 10 | | Aspherical surface | 228.7477 | 0.9723 | | |
| 11 | L6 | Aspherical surface | 27.2945 | 1.7629 | 1.61 | 25.70 |
| 12 | | Aspherical surface | -8.1436 | 0.45 | | |
| 13 | L7 | Aspherical surface | -8.5502 | 0.4229 | 1.65 | 21.45 |
| 14 | | Aspherical surface | -14.7201 | 3.2875 | | |
| 15 | L8 | Aspherical surface | -6.1000 | 1.8249 | 1.54 | 56.02 |
| 16 | | Aspherical surface | -100.8237 | 3.2698 | | |
| 17 | Light filter | Spherical surface | Infinity | 0.11 | 1.52 | 64.19 |
| 18 | | Spherical surface | Infinity | 0.3 | | |
| 19 | Imaging surface | Spherical surface | Infinity | 0 | | |

Table 3b

| Surface number | A4 | A6 | A8 | A10 |
|---|---|---|---|---|
| 5 | -1.77E-03 | -1.33E-04 | 4.01E-06 | 8.98E-08 |

(continued)

| Surface number | A4 | A6 | A8 | A10 |
|---|---|---|---|---|
| 6 | 2.84E-04 | 4.76E-06 | -5.72E-06 | -1.58E-07 |
| 7 | 3.23E-04 | -9.49E-05 | 1.65E-05 | -1.34E-06 |
| 8 | 2.82E-04 | -1.11E-04 | 2.31E-05 | -1.25E-06 |
| 9 | 5.14E-03 | 1.95E-04 | -2.57E-05 | 8.16E-07 |
| 10 | 1.85E-03 | 5.23E-05 | -2.16E-05 | 1.34E-06 |
| 11 | -1.26E-03 | -5.95E-05 | -6.86E-06 | 3.39E-07 |
| 12 | -5.89E-04 | -8.72E-05 | 2.73E-06 | -6.52E-08 |
| 13 | 1.09E-02 | -6.44E-04 | 3.44E-05 | -7.84E-07 |
| 14 | 1.01E-02 | -4.54E-04 | 1.72E-05 | -1.39E-07 |
| 15 | -3.44E-03 | 3.27E-05 | 3.00E-06 | -9.12E-07 |
| 16 | -2.88E-03 | 1.01E-04 | -4.57E-06 | 5.55E-08 |

The aspheric surface of the long-focus lens 1 in Table 3a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

Herein, z is a relative distance between a point that is on the aspheric surface and whose distance from the optical axis is r and an intersecting tangent plane tangent to the optical axis of the aspheric surface; r is a vertical distance between a point on an aspheric curve and the optical axis; c is a curvature; k is a cone coefficient, and is 0; and $\alpha_i$ is an $i^{th}$-order aspheric coefficient. For details, refer to Table 3b.

Table 3c shows basic parameters of the camera module 302 shown in FIG. 9 in a possible embodiment. In Table 3c, ImgH is a semi-sensor diagonal of a photosensitive element 2, Fsys is a focal length of the long-focus lens 1, f1 is a focal length of a first lens L1, f2 is a focal length of a second lens L2, F1 is a focal length of a first optical element G1, F2 is a focal length of a first lens group G21 of a second optical element G2, F3 is a focal length of a second lens group G22 of the second optical element G2, and TTL is a total track length of the long-focus lens 1.

Table 3c

| Parameter (mm) | ImgH | F-number | Fsys | f1 | f2 | F1 | F2 | F3 | TTL |
|---|---|---|---|---|---|---|---|---|---|
| Value | 5.11 | 2.16 | 18.9 | 21.9277 | -35.1525 | 41.049 | 9.9385 | -8.23 | 24.46 |

In this embodiment, a ratio of the focal length F1 of the first optical element G1 to the focal length Fsys of the long-focus lens 1 is as follows: F1/Fsys=2.17; a ratio of a curvature radius L1S1R of an incident surface 11 of the first optical element G1 to the focal length Fsys of the long-focus lens 1 is as follows: L1S1R/Fsys=0.72; and a ratio of a curvature radius L2S2R of an emergent surface 13 of the first optical element G1 to the focal length Fsys of the long-focus lens 1 is as follows: L2S2R/Fsys=1.15.

A ratio of the focal length f1 of the first lens L1 to the focal length Fsys of the long-focus lens 1 is as follows: f1/Fsys=1.16. A ratio of the focal length f2 of the second lens L2 to the focal length Fsys of the long-focus lens 1 is as follows: f2/Fsys=-1.86.

A ratio of the focal length F2 of the first lens group G21 to the focal length Fsys of the long-focus lens 1 is as follows: F2/Fsys=0.53. A ratio of the focal length F3 of the second lens group G22 to the focal length Fsys of the long-focus lens 1 is as follows: F3/Fsys=-0.44. A focusing stroke of the second lens group G22 may be approximately 2.0 mm. The camera module 302 may implement macro image shooting, for example, may implement macro image shooting of 100 mm.

A ratio of the total track length TTL of the long-focus lens 1 to the focal length Fsys of the long-focus lens 1 is as follows: TTL/Fsys=1.29.

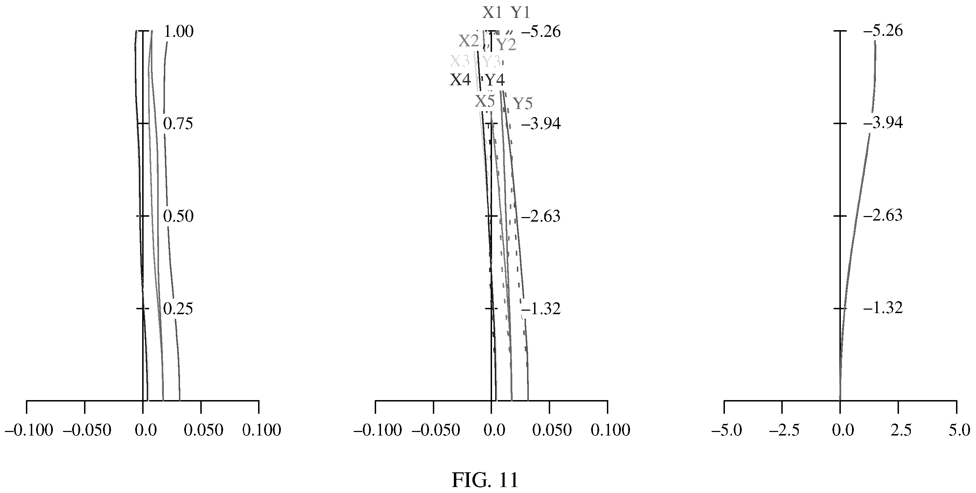

FIG. 11 is a diagram of a simulation effect of the camera module 302 shown in FIG. 9 in a possible embodiment.

FIG. 11 includes an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A horizontal coordinate of the curve diagram is a deviation value along an optical axis direction, and a vertical coordinate of the curve diagram is a normalized coordinate at a pupil. The values shown in FIG. 11 are all small, and an axial aberration (a spherical aberration, a chromatic aberration, or the like) of the long-focus lens 1 is well corrected. The astigmatic curvature of field diagram shows deviations of convergence points of pencils in different fields of view from an ideal imaging plane. X is a beam in a sagittal direction, and Y is a beam in a meridian direction. A horizontal coordinate of the diagram is a deviation value along the optical axis direction, and a vertical coordinate of the diagram is a corresponding field of view. When a value of a field of view is excessively large, image quality of the field of view is poor or a high-order aberration exists. As shown in FIG. 11, curvatures of field in the two directions are small, and the system has a good depth of focus. The distortion diagram is used to represent relative deviations of convergence points of beams in different fields of view (actual image heights) from an ideal image height. As shown in FIG. 11, the relative deviations are all within 2.5%. This can ensure that there is no clear deformation in a picture.

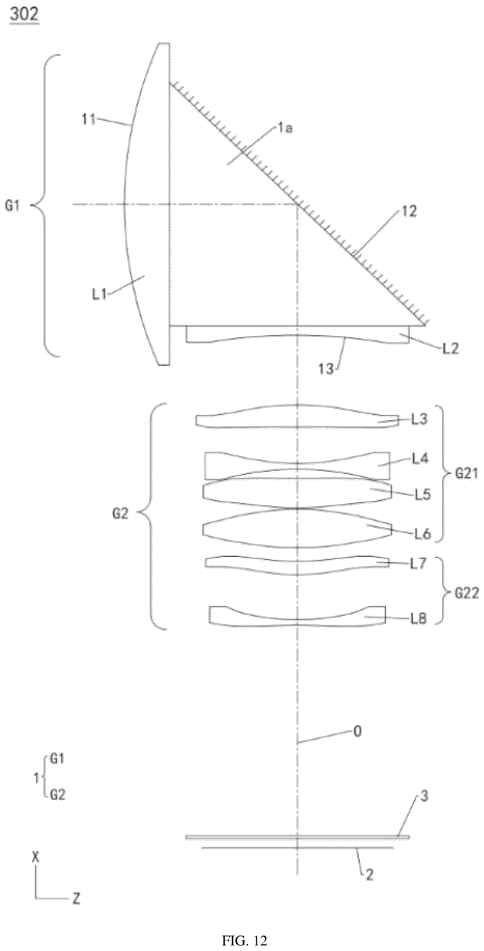

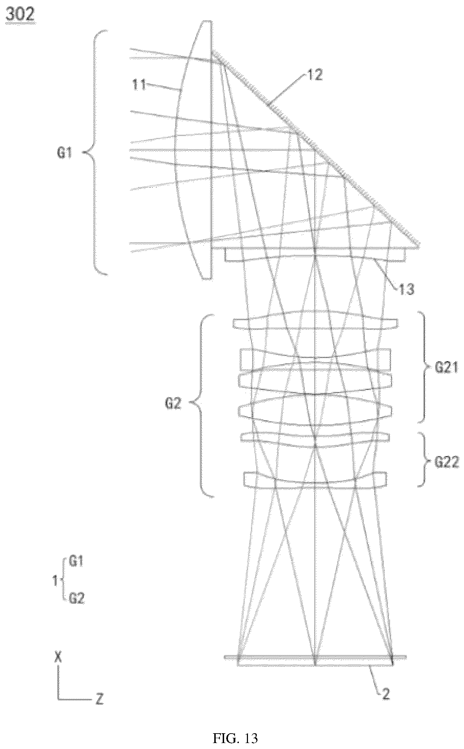

FIG. 12 is a diagram of a partial structure of the camera module 302 shown in FIG. 2 in some other embodiments. FIG. 13 is a diagram of an optical path structure of the camera module 302 shown in FIG. 12 in some usage statuses. The camera module 302 shown in FIG. 12 includes most technical features of the camera module 302 shown in FIG. 6. The following mainly describes differences between the two, and most content that is the same between the two is not described again.

In some embodiments, the camera module 302 includes a long-focus lens 1, a light filter, and a photosensitive element 2 that are arranged from an object side to an image side, and the long-focus lens 1 includes a first optical element G1 and a second optical element G2 that are arranged from the object side to the image side. The first optical element G1 includes a first lens L1, a first reflector 1a, and a second lens L2 that are arranged from the object side to the image side. An incident surface 11 of the first optical element G1 is formed on an object side surface of the first lens L1, and a convex surface is provided at a paraxial axis of the incident surface 11. The first reflector 1a includes a first reflective surface 12, the first reflective surface 12 is configured to change a propagation direction of an optical axis, and the first reflector 1a is a prism. An emergent surface 13 of the second optical element G2 is formed on an image side surface of the second lens L2, and a concave surface is provided at a paraxial axis of the emergent surface 13. In an image stabilization process of the camera module 302, the first optical element G1 moves, and the photosensitive element 2 remains fixed.

The second optical element G2 includes a first lens group G21 and a second lens group G22 located on an image side of the first lens group G21. The first lens group G21 includes a third lens L3, a fourth lens L4, a fifth lens L5, and a sixth lens L6 that are arranged from the object side to the image side. The second lens group G22 includes a seventh lens L7 and an eighth lens L8 located on an image side of the seventh lens L7. The first lens group G21 is a movable lens group, and the second lens group G22 is a fixed lens group. In a focusing process of the camera module 302, the first lens group G21 moves along the optical axis.

An optical axis O includes a first part from the object side surface of the first lens L1 to the first reflective surface 12 and a second part from the first reflective surface 12 to the photosensitive element 2.

Based on data and a simulation result, the following presents a specific solution of the long-focus lens 1 shown in FIG. 12 in a possible embodiment.

Refer to Table 4a and Table 4b together. Table 4a shows a curvature radius (R), an interval (D), a refractive index (Nd), and an Abbe number of each lens, reflector, and light filter when the camera module 302 shown in FIG. 12 focuses on a long shot in a possible embodiment. The interval includes thicknesses of structures and a spacing between the structures. Table 4b shows aspheric coefficients of the lenses of the long-focus lens 1 shown in FIG. 12 in a possible embodiment.

Table 4a

| Surface number | Description | Surface type | Curvature radius | Interval | Refractive index | Abbe number |
|---|---|---|---|---|---|---|
| 1 | L1 | Spherical surface | 13.8907 | 1.4347 | 1.62 | 63.39 |
| 2 | First reflector 1a | Spherical surface | Infinity | 8.1514 | 1.62 | 63.39 |
| 3 | L2 | Spherical surface | Infinity | 0.32 | 1.62 | 63.39 |
| 4 | | Spherical surface | 17.6860 | 2.3350 | | |
| STO | Aperture diaphragm | | | | | |
| 5 | L3 | Aspherical surface | 7.9738 | 0.7397 | 1.54 | 56.02 |
| 6 | | Aspherical surface | -139.1539 | 1.2185 | | |

(continued)

| Surface number | Description | Surface type | Curvature radius | Interval | Refractive index | Abbe number |
|---|---|---|---|---|---|---|
| 7 | L4 | Aspherical surface | -6.3542 | 0.2 | 1.67 | 19.24 |
| 8 | | Aspherical surface | 7.9593 | 0.3055 | | |
| 9 | L5 | Aspherical surface | -35.2693 | 0.9969 | 1.54 | 55.73 |
| 10 | | Aspherical surface | -7.5067 | 0.04 | | |
| 11 | L6 | Aspherical surface | 8.0904 | 1.2815 | 1.61 | 25.70 |
| 12 | | Aspherical surface | -10.3562 | 0.4642 | | |
| 13 | L7 | Aspherical surface | -7.3233 | 0.4492 | 1.65 | 21.45 |
| 14 | | Aspherical surface | -5.6051 | 1.4968 | | |
| 15 | L8 | Aspherical surface | -8.9995 | 0.2 | 1.54 | 56.02 |
| 16 | | Aspherical surface | 15.3732 | 7.0397 | | |
| 17 | Light filter | Spherical surface | Infinity | 0.11 | 1.52 | 64.19 |
| 18 | | Spherical surface | Infinity | 0.3 | | |
| 19 | Imaging surface | Spherical surface | Infinity | 0 | | |

Table 4b

| Surface number | A4 | A6 | A8 | A10 |
|---|---|---|---|---|
| 5 | -1.14E-03 | 3.28E-06 | -2.10E-05 | 9.79E-08 |
| 6 | 1.62E-03 | 2.40E-06 | -1.56E-05 | -2.51E-07 |
| 7 | 5.39E-03 | -3.90E-04 | 2.55E-05 | -1.48E-06 |
| 8 | -2.16E-03 | 7.38E-05 | 2.43E-05 | -2.31E-06 |
| 9 | 4.02E-03 | 1.93E-04 | -3.86E-06 | -1.49E-06 |
| 10 | 6.00E-03 | 1.35E-04 | -6.63E-05 | 2.48E-06 |
| 11 | -4.88E-04 | -6.61E-06 | -1.08E-05 | 7.87E-07 |
| 12 | -6.83E-04 | 1.59E-04 | -8.47E-06 | 5.78E-07 |
| 13 | 6.67E-03 | 5.45E-05 | 1.97E-05 | -2.07E-06 |
| 14 | 8.19E-03 | -1.38E-04 | 4.72E-05 | -4.35E-06 |
| 15 | -5.03E-03 | 6.12E-05 | -6.75E-06 | -2.65E-06 |
| 16 | -7.80E-03 | 5.69E-04 | -5.35E-05 | 1.89E-06 |

The aspheric surface of the long-focus lens 1 in Table 4a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

Herein, z is a relative distance between a point that is on the aspheric surface and whose distance from the optical axis is r and an intersecting tangent plane tangent to the optical axis of the aspheric surface; r is a vertical distance between a point on an aspheric curve and the optical axis; c is a curvature; k is a cone coefficient, and is 0; and $\alpha_i$ is an ith-order aspheric coefficient. For details, refer to Table 4b.

Table 4c shows basic parameters of the camera module 302 shown in FIG. 12 in a possible embodiment. In Table 4c, ImgH is a semi-sensor diagonal of a photosensitive element 2, Fsys is a focal length of the long-focus lens 1, f1 is a focal length of a first lens L1, f2 is a focal length of a second lens L2, F1 is a focal length of a first optical element G1, F2 is a focal length of a first lens group G21 of a second optical element G2, F3 is a focal length of a second lens group G22 of the second optical element G2, and TTL is a total track length of the long-focus lens 1.

Table 4c

| Parameter (mm) | ImgH | F-number | Fsys | f1 | f2 | F1 | F2 | F3 | TTL |
|---|---|---|---|---|---|---|---|---|---|
| Value | 5.11 | 2.06 | 18.9 | 22.4123 | -28.5359 | 52.2544 | 10.8329 | -16.4699 | 27.083 |

In this embodiment, a ratio of the focal length F1 of the first optical element G1 to the focal length Fsys of the long-focus lens 1 is as follows: F1/Fsys=2.76; a ratio of a curvature radius L1S1R of an incident surface 11 of the first optical element G1 to the focal length Fsys of the long-focus lens 1 is as follows: L1S1R/Fsys=0.73; and a ratio of a curvature radius L2S2R of an emergent surface 13 of the first optical element G1 to the focal length Fsys of the long-focus lens 1 is as follows: L2S2R/Fsys=0.94.

A ratio of the focal length f1 of the first lens L1 to the focal length Fsys of the long-focus lens 1 is as follows: f1/Fsys=1.19. A ratio of the focal length f2 of the second lens L2 to the focal length Fsys of the long-focus lens 1 is as follows: f2/Fsys=-1.51.

A ratio of the focal length F2 of the first lens group G21 to the focal length Fsys of the long-focus lens 1 is as follows: F2/Fsys=0.57. A ratio of the focal length F3 of the second lens group G22 to the focal length Fsys of the long-focus lens 1 is as follows: F3/Fsys=-0.87. A focusing stroke of the second lens group G22 may be approximately 1.735 mm. The camera module 302 may implement macro image shooting, for example, may implement macro image shooting of 100 mm.

A ratio of the total track length TTL of the long-focus lens 1 to the focal length Fsys of the long-focus lens 1 is as follows: TTL/Fsys=1.43.

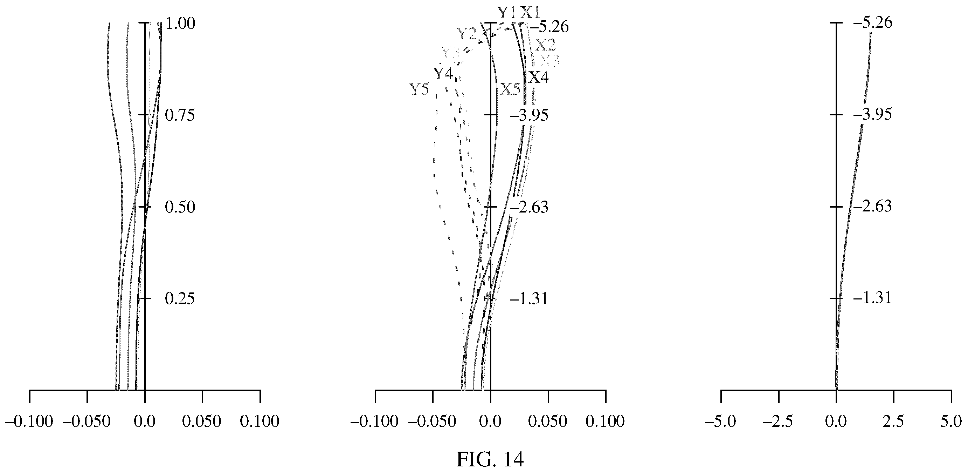

FIG. 14 is a diagram of a simulation effect of the camera module 302 shown in FIG. 12 in a possible embodiment.

FIG. 14 includes an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A horizontal coordinate of the curve diagram is a deviation value along an optical axis direction, and a vertical coordinate of the curve diagram is a normalized coordinate at a pupil. The values shown in FIG. 14 are all small, and an axial aberration (a spherical aberration, a chromatic aberration, or the like) of the long-focus lens 1 is well corrected. The astigmatic curvature of field diagram shows deviations of convergence points of pencils in different fields of view from an ideal imaging plane. X is a beam in a sagittal direction, and Y is a beam in a meridian direction. A horizontal coordinate of the diagram is a deviation value along the optical axis direction, and a vertical coordinate of the diagram is a corresponding field of view. When a value of a field of view is excessively large, image quality of the field of view is poor or a high-order aberration exists. As shown in FIG. 14, curvatures of field in the two directions are small, and the system has a good depth of focus. The distortion diagram is used to represent relative deviations of convergence points of beams in different fields of view (actual image heights) from an ideal image height. As shown in FIG. 14, the relative deviations are all within 2.5%. This can ensure that there is no clear deformation in a picture.

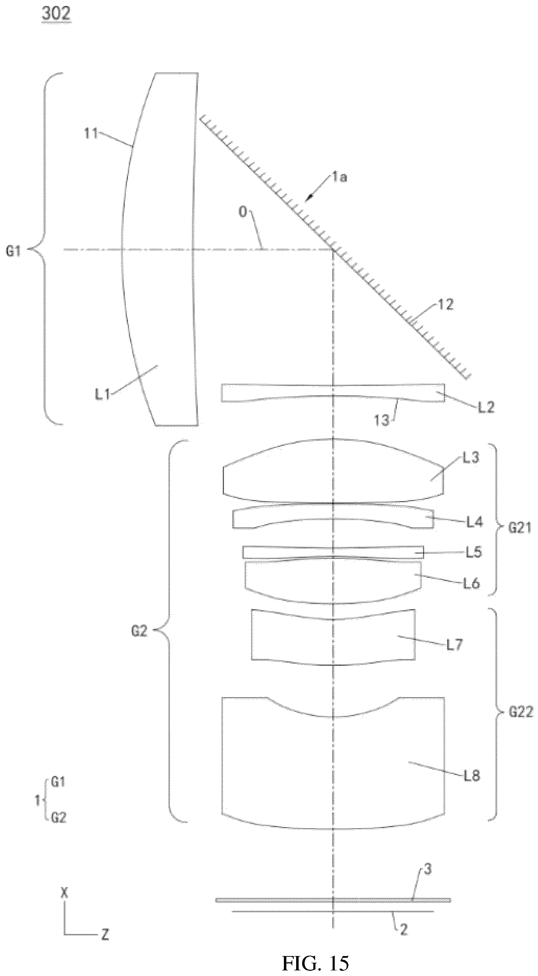

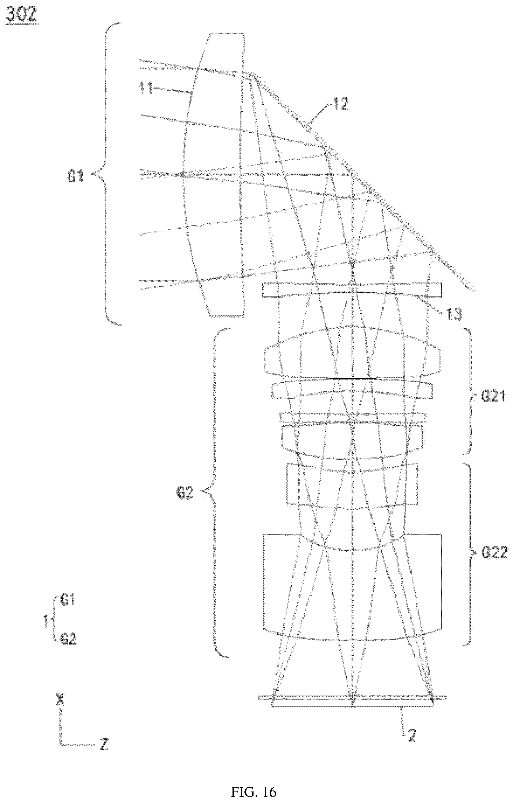

FIG. 15 is a diagram of a partial structure of the camera module 302 shown in FIG. 2 in some other embodiments. FIG. 16 is a diagram of an optical path structure of the camera module 302 shown in FIG. 15 in some usage statuses. The camera module 302 shown in FIG. 15 includes most technical features of the camera module 302 shown in FIG. 6. The following mainly describes differences between the two, and most content that is the same between the two is not described again.

In some embodiments, the camera module 302 includes a long-focus lens 1, a light filter, and a photosensitive element 2 that are arranged from an object side to an image side, and the long-focus lens 1 includes a first optical element G1 and a second optical element G2 that are arranged from the object side to the image side. The first optical element G1 includes a first lens L1, a first reflector 1a, and a second lens L2 that are arranged from the object side to the image side. An incident surface 11 of the first optical element G1 is formed on an object side surface of the first lens L1, a convex surface is provided at a paraxial axis of the incident surface 11, and the incident surface 11 is an aspheric surface. The first reflector 1a includes a first reflective surface 12, the first reflective surface 12 is configured to change a propagation direction of an optical axis, and the first reflector 1a is a mirror. An emergent surface 13 of the second optical element G2 is formed on an image side surface of the second lens L2, a concave surface is provided at a paraxial axis of the emergent surface 13, and the emergent surface 13 is an aspheric surface. In an image stabilization process of the camera module 302, the first optical element G1 moves, and the photosensitive element 2 remains fixed.

The second optical element G2 includes a first lens group G21 and a second lens group G22 located on an image side of the first lens group G21. The first lens group G21 includes a third lens L3, a fourth lens L4, a fifth lens L5, and a sixth lens L6 that are arranged from the object side to the image side. The second lens group G22 includes a seventh lens L7 and an eighth lens L8 located on an image side of the seventh lens L7. Both the first lens group G21 and the second lens group G22 are movable lens groups. In a focusing process of the camera module 302, the first lens group G21 and the second lens group G22 move along the optical axis.

An optical axis O includes a first part from the object side surface of the first lens L1 to the first reflective surface 12 and a second part from the first reflective surface 12 to the photosensitive element 2.

Based on data and a simulation result, the following presents a specific solution of the long-focus lens 1 shown in FIG. 15 in a possible embodiment.

Refer to Table 5a and Table 5b together. Table 5a shows a curvature radius (R), an interval (D), a refractive index (Nd), and an Abbe number of each lens, reflector, and light filter when the camera module 302 shown in FIG. 15 focuses on a long shot in a possible embodiment. The interval includes thicknesses of structures and a spacing between the structures. Table 5b shows aspheric coefficients of the lenses of the long-focus lens 1 shown in FIG. 15 in a possible embodiment.

Table 5a

| Surface number | Description | Surface type | Curvature radius | Interval | Refractive index | Abbe number |
|---|---|---|---|---|---|---|
| 1 | L1 | Aspherical surface | 14.9683 | 2.1494 | 1.54 | 56.02 |
| 2 | First reflector 1a | Aspherical surface | 79.8128 | 8.5012 | | |
| 3 | L2 | Aspherical surface | -8.52E+01 | 0.32 | 1.67 | 19.24 |
| 4 | | Aspherical surface | 26.4989 | 1.3405 | | |
| STO | Aperture diaphragm | | | | | |
| 5 | L3 | Aspherical surface | 5.7408 | 1.9888 | 1.54 | 56.02 |
| 6 | | Aspherical surface | -285.2647 | 0.04 | | |
| 7 | L4 | Aspherical surface | 54.5919 | 0.4576 | 1.67 | 19.24 |
| 8 | | Aspherical surface | 11.5557 | 0.8879 | | |
| 9 | L5 | Aspherical surface | -129.9130 | 0.2989 | 1.54 | 55.73 |
| 10 | | Aspherical surface | 52.8834 | 0.04 | | |
| 11 | L6 | Aspherical surface | 11.4203 | 1.4070 | 1.61 | 25.70 |
| 12 | | Aspherical surface | -9.9459 | 0.4920 | | |
| 13 | L7 | Aspherical surface | -5.4021 | 1.4427 | 1.65 | 21.45 |
| 14 | | Aspherical surface | -6.86E+00 | 1.6020 | | |
| 15 | L8 | Aspherical surface | -3.72E+00 | 3.4951 | 1.53 | 56.28 |
| 16 | | Aspherical surface | -2.95E+01 | 2.1595 | | |
| 17 | Light filter | Spherical surface | Infinity | 0.11 | 1.52 | 64.19 |
| 18 | | Spherical surface | Infinity | 0.3 | | |
| 19 | Imaging surface | Spherical surface | Infinity | 0 | | |

Table 5b

| Surface number | A4 | A6 | A8 | A10 |
|---|---|---|---|---|
| 1 | 4.8 1E-05 | -8.62E-07 | -3.87E-08 | -2.58E-10 |
| 2 | 6.12E-05 | -2.97E-06 | -2.31E-08 | -2.10E-10 |
| 3 | -2.70E-04 | 4.12E-05 | 2.04E-06 | -3.71E-07 |
| 4 | -4.30E-04 | 1.38E-04 | 8.40E-07 | -5.33E-07 |
| 5 | -1.70E-03 | 5.39E-05 | 6.55E-06 | -9.43E-07 |
| 6 | -1.23E-03 | -1.18E-04 | 6.59E-06 | -2.32E-07 |
| 7 | 1.95E-03 | -1.18E-04 | 1.38E-05 | -6.35E-07 |

(continued)

| Surface number | A4 | A6 | A8 | A10 |
|---|---|---|---|---|
| 8 | -8.88E-05 | 8.67E-05 | 2.58E-05 | -2.07E-10 |
| 9 | 1.80E-04 | -3.76E-04 | 2.82E-05 | 2.23E-06 |
| 10 | 1.99E-03 | -2.64E-04 | -8.56E-05 | 9.87E-06 |
| 11 | -3.23E-03 | 9.87E-05 | -8.95E-05 | 7.89E-06 |
| 12 | -1.48E-03 | -1.33E-04 | 6.26E-06 | 4.78E-09 |
| 13 | 1.08E-02 | -6.96E-04 | 3.98E-05 | -5.24E-07 |
| 14 | 9.01E-03 | -3.56E-04 | -1.04E-05 | 1.80E-06 |
| 15 | 1.18E-03 | -5.73E-04 | 2.22E-05 | -1.96E-06 |
| 16 | -2.02E-03 | -2.79E-05 | 1.30E-06 | -7.69E-09 |

The aspheric surface of the long-focus lens 1 in Table 5a may be defined by using, but not limited to, the following aspheric curve equation:

$$z = \frac{cr^2}{1 + \sqrt{1 - (1+k)c^2 r^2}} + \sum_{i=1}^{N} \alpha_i r^{2i}$$

Herein, z is a relative distance between a point that is on the aspheric surface and whose distance from the optical axis is r and an intersecting tangent plane tangent to the optical axis of the aspheric surface; r is a vertical distance between a point on an aspheric curve and the optical axis; c is a curvature; k is a cone coefficient, and is 0; and $\alpha_i$ is an $i^{th}$-order aspheric coefficient. For details, refer to Table 5b.

Table 5c shows basic parameters of the camera module 302 shown in FIG. 15 in a possible embodiment. In Table 5c, ImgH is a semi-sensor diagonal of a photosensitive element 2, Fsys is a focal length of the long-focus lens 1, f1 is a focal length of a first lens L1, f2 is a focal length of a second lens L2, F1 is a focal length of a first optical element G1, F2 is a focal length of a first lens group G21 of a second optical element G2, F3 is a focal length of a second lens group G22 of the second optical element G2, and TTL is a total track length of the long-focus lens 1.

Table 5c

| Parameter (mm) | ImgH | F-number | Fsys | f1 | f2 | F1 | F2 | F3 | TTL |
|---|---|---|---|---|---|---|---|---|---|
| Value | 5.11 | 2.06 | 20 | 33.3353 | -29.799 | 146.05 | 7.5236 | -6.734 | 27.0324 |

In this embodiment, a ratio of the focal length F1 of the first optical element G1 to the focal length Fsys of the long-focus lens 1 is as follows: F1/Fsys=7.3; a ratio of a curvature radius L1S1R of an incident surface 11 of the first optical element G1 to the focal length Fsys of the long-focus lens 1 is as follows: L1S1R/Fsys=0.75; and a ratio of a curvature radius L2S2R of an emergent surface 13 of the first optical element G1 to the focal length Fsys of the long-focus lens 1 is as follows: L2S2R/Fsys=1.32.

A ratio of the focal length f1 of the first lens L1 to the focal length Fsys of the long-focus lens 1 is as follows: f1/Fsys=1.67. A ratio of the focal length f2 of the second lens L2 to the focal length Fsys of the long-focus lens 1 is as follows: f2/Fsys=-1.49.

A ratio of the focal length F2 of the first lens group G21 to the focal length Fsys of the long-focus lens 1 is as follows: F2/Fsys=0.38. A ratio of the focal length F3 of the second lens group G22 to the focal length Fsys of the long-focus lens 1 is as follows: F3/Fsys=-0.34. A focusing stroke of the first lens group G21 may be approximately 0.84 mm, and a focusing stroke of the second lens group G22 may be approximately 1.66 mm. The camera module 302 may implement macro image shooting, for example, may implement macro image shooting of 50 mm.

A ratio of the total track length TTL of the long-focus lens 1 to the focal length Fsys of the long-focus lens 1 is as follows: TTL/Fsys=1.35.

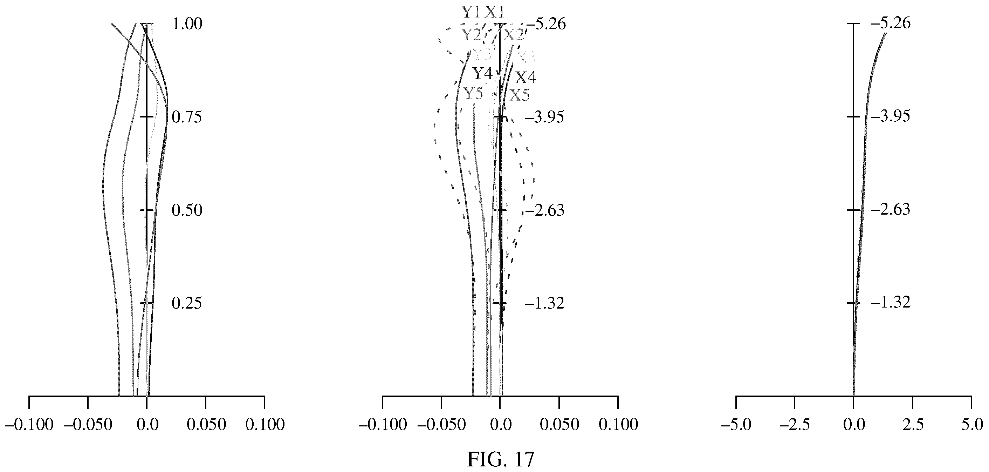

FIG. 17 is a diagram of a simulation effect of the camera module 302 shown in FIG. 15 in a possible embodiment.

FIG. 17 includes an axial chromatic aberration curve diagram, an astigmatic curvature of field diagram, and a distortion diagram of the long-focus lens 1. The axial chromatic aberration curve diagram includes spherical aberration curves of different bands corresponding to a system (the figure includes 650 nm, 610 nm, 555 nm, 510 nm, and 470 nm). A horizontal coordinate of the curve diagram is a deviation value along an optical axis direction, and a vertical coordinate of the curve diagram is a normalized coordinate at a pupil. The values shown in FIG. 17 are all small, and an axial aberration (a spherical aberration, a chromatic aberration, or the like) of the long-focus lens 1 is well corrected. The astigmatic curvature of field diagram shows deviations of convergence points of pencils in different fields of view from an ideal imaging plane. X is a beam in a sagittal direction, and Y is a beam in a meridian direction. A horizontal coordinate of the diagram is a deviation value along the optical axis direction, and a vertical coordinate of the diagram is a corresponding field of view. When a value of a field of view is excessively large, image quality of the field of view is poor or a high-order aberration exists. As shown in FIG. 17, curvatures of field in the two directions are small, and the system has a good depth of focus. The distortion diagram is used to represent relative deviations of convergence points of beams in different fields of view (actual image heights) from an ideal image height. As shown in FIG. 17, the relative deviations are all within 2.5%. This can ensure that there is no clear deformation in a picture.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application. In a case that no conflict occurs, embodiments of this application and the features in the embodiments may be mutually combined.

## Claims

1. A camera module (302), comprising a long-focus lens (1) and a photosensitive element (2), wherein the photosensitive element (2) is located on an image side of the long-focus lens (1);

   the long-focus lens (1) comprises a first optical element (G1) and a second optical element (G2);
   the first optical element (G1) comprises an incident surface (11), a first reflective surface (12), and an emergent surface (13) that are arranged from an object side to the image side, a convex surface is provided at a paraxial axis of the incident surface (11), the first reflective surface (12) changes a propagation direction of an optical axis from a first direction to a second direction, the second direction intersects the first direction, and a concave surface is provided at a paraxial axis of the emergent surface (13);
   the second optical element (G2) is located on an image side of the first optical element (G1), and the second optical element (G2) comprises at least one lens; and
   in an image stabilization process of the camera module (302), the first optical element (G1) rotates around the first direction and/or rotates around a third direction, the photosensitive element (2) remains fixed, and the third direction intersects the first direction and intersects the second direction.

2. The camera module (302) according to claim 1, wherein a focal length F1 of the first optical element (G1) and a focal length Fsys of the long-focus lens (1) satisfy the following: F1/Fsys$\geq$1.2; or 22.5$\geq$F1/Fsys$\geq$1.2.

3. The camera module (302) according to claim 1 or 2, wherein the focal length F1 of the first optical element (G1) satisfies the following: F1$\leq$380 mm; or
   the focal length Fsys of the long-focus lens (1) satisfies the following: 10 mm$\leq$Fsys$\leq$40 mm.

4. The camera module (302) according to any one of claims 1 to 3, wherein a curvature radius L1S1R of the incident surface (11) satisfies the following: 6 mm$\leq$L1S1R$\leq$300 mm or 6 mm$\leq$L1S1R$\leq$23 mm; and/or
   a curvature radius L2S2R of the emergent surface (13) satisfies the following: 10 mm$\leq$L2S2R$\leq$300 mm or 15 mm$\leq$L2S2R$\leq$300 mm.

5. The camera module (302) according to any one of claims 1 to 4, wherein the curvature radius L1S1R of the incident surface (11) and the focal length Fsys of the long-focus lens (1) satisfy the following: 0.4$\leq$L1S1R/Fsys$\leq$6 or 0.4$\leq$L1S1R/Fsys$\leq$1.4; and/or
   the curvature radius L2S2R of the emergent surface (13) and the focal length Fsys of the long-focus lens (1) satisfy the following: 0.4$\leq$L2S2R/Fsys$\leq$10 or 0.9$\leq$L2S2R/Fsys$\leq$6.

6. The camera module (302) according to any one of claims 1 to 5, wherein the first optical element (G1) comprises a first lens (L1) and a second lens (L2), the first lens (L1) is located on an object side of the first reflective surface (12), an object side surface of the first lens (L1) is the incident surface (11), the second lens (L2) is located on an image side of the first reflective surface (12), and an image side surface of the second lens (L2) is the emergent surface (13); and

a focal length f1 of the first lens (L1) and the focal length Fsys of the long-focus lens (1) satisfy the following: 0.5≤f1/Fsys≤20; and/or

a focal length f2 of the second lens (L2) and the focal length Fsys of the long-focus lens (1) satisfy the following: -20≤f2/Fsys≤0.

7. The camera module (302) according to any one of claims 1 to 6, wherein the first optical element (G1) comprises a first reflector (1a), the first reflector (1a) comprises the first reflective surface (12), the first reflector (1a) is a prism, and a refractive index Nd of the first reflector (1a) satisfies the following: Nd≤1.85.

8. The camera module (302) according to any one of claims 1 to 6, wherein the first optical element (G1) comprises a first reflector (1a), the first reflector (1a) comprises the first reflective surface (12), and the first reflector (1a) is a prism; and an image side surface of the first lens (L1) is fastened to an object side surface of the first reflector (1a), and an object side surface of the second lens (L2) is fastened to an image side surface of the second reflector.

9. The camera module (302) according to claim 8, wherein the first lens (L1), the first reflector (1a), and the second lens (L2) are all made of a glass material, the first lens (L1) is glued to the first reflector (1a), and the second lens (L2) is glued to the first reflector (1a).

10. The camera module (302) according to any one of claims 1 to 9, wherein the second optical element (G2) comprises a first lens group (G21) and a second lens group (G22), the second lens group (G22) is located on an image side of the first lens group (G21), and the camera module (302) implements focusing through movement of the first lens group (G21) and/or the second lens group (G22) along the optical axis.

11. The camera module (302) according to claim 10, wherein a focal length F2 of the first lens group (G21) and the focal length Fsys of the long-focus lens (1) satisfy the following: 0.2≤F2/Fsys≤1; and/or

a focal length F3 of the second lens group (G22) and the focal length Fsys of the long-focus lens (1) satisfy the following: -1.5≤F3/Fsys≤-0.2.

12. The camera module (302) according to claim 10 or 11, wherein the first optical element (G1) comprises two or three lenses, the first lens group (G21) comprises three to five lenses, and the second lens group (G22) comprises one to four lenses.

13. The camera module (302) according to any one of claims 1 to 9, wherein the camera module (302) implements focusing through movement of the second optical element (G2) along the optical axis.

14. The camera module (302) according to claim 13, wherein the first optical element (G1) comprises two or three lenses, and the second optical element (G2) comprises three to six lenses.

15. The camera module (302) according to any one of claims 1 to 14, wherein a total track length TTL of the long-focus lens (1) and the focal length Fsys of the long-focus lens (1) satisfy the following: 0.8≤TTL/Fsys≤3.

16. The camera module (302) according to any one of claims 1 to 15, wherein the total track length TTL of the long-focus lens (1) satisfies the following: 15 mm≤TTL≤50 mm.

17. The camera module (302) according to any one of claims 1 to 16, wherein the long-focus lens (1) further comprises a second reflective surface (14), the second reflective surface (14) is located on an image side of the second optical element (G2), the second reflective surface (14) changes the propagation direction of the optical axis from the second direction to a fourth direction, and the fourth direction intersects the second direction.

18. The camera module (302) according to any one of claims 1 to 17, wherein a field of view of the long-focus lens (1) is less than or equal to 40°.

19. The camera module (302) according to any one of claims 1 to 17, wherein a semi-sensor diagonal ImgH of the photosensitive element (2) satisfies the following: 2.5 mm≤ImgH≤8.16 mm, 2.5 mm≤ImgH≤4.0 mm, or 4.2 mm≤ImgH≤8.16 mm.

20. An electronic device, comprising an image processor (60) and the camera module (302) according to any one of claims 1 to 19, wherein the image processor (60) is communicatively connected to the camera module (302), and the

**EP 4 633 178 A1**

image processor (60) is configured to: obtain image data from the camera module (302), and process the image data.

**32**

FIG. 1

FIG. 2

302

FIG. 3

FIG. 4

1.00

0.75

0.50

0.25

−0.100 −0.050 0.0 0.050 0.100

X1 Y1 −3.07

X3 Y3

X4 Y4

X5 Y5 −2.30

−1.53

−0.77

−0.100 −0.050 0.0 0.050 0.100

−3.07

−2.30

−1.53

−0.77

−5.0 −2.5 0.0 2.5 5.0

FIG. 5

302

FIG. 6

FIG. 7

FIG. 8

FIG. 9

FIG. 10

FIG. 11

FIG. 12

FIG. 13

FIG. 14

FIG. 15

— no

FIG. 16

FIG. 17

# EP 4 633 178 A1

## INTERNATIONAL SEARCH REPORT

| International application No. |
|---|
| **PCT/CN2024/092592** |

**A. CLASSIFICATION OF SUBJECT MATTER**

H04N23/55(2023.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS; CNTXT; VEN; USTXT; JPTXT; WOTXT; EPTXT; CNKI; IEEE: 潜望, 长焦, 防抖, 抖动, 稳像, 镜片, 透镜, 光学, 旋转, 转动, 偏转, 光焦度, 正, 负, 入光, 出光, 凹, 凸, 曲面, 反射, periscope, optical, reflect, lens, positive, negative, convex, concave, curve, shake, rotate

**C. DOCUMENTS CONSIDERED TO BE RELEVANT**

| Category* | Citation of document, with indication, where appropriate, of the relevant passages | Relevant to claim No. |
|---|---|---|
| PX | CN 118011708 A (VIVO COMMUNICATION TECHNOLOGY CO., LTD.) 10 May 2024 (2024-05-10) <br> description, paragraphs [0029]-[0109], and figures 1-13 | 1-20 |
| X | WO 2023004794 A1 (HUAWEI TECHNOLOGIES CO., LTD.) 02 February 2023 (2023-02-02) <br> description, paragraphs [0003]-[0008] and [0025]-[0049], and figures 1-5 | 1-20 |
| Y | CN 211478746 U (NANCHANG O-FILM OPTICAL-ELECTRONIC TECHNOLOGY CO., LTD.) 11 September 2020 (2020-09-11) <br> description, paragraphs [0038]-[0088], and figures 1-8 | 1-20 |
| Y | CN 115437128 A (HONOR DEVICE CO., LTD.) 06 December 2022 (2022-12-06) <br> description, paragraphs [0061]-[0196], and figures 1-20c | 1-20 |
| A | JP 2021043375 A (TAMRON K.K.) 18 March 2021 (2021-03-18) <br> entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 July 2024** | **25 July 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/092592**

| Patent document cited in search report | | | Publication date (day/month/year) | Patent family member(s) | | | Publication date (day/month/year) |
|---|---|---|---|---|---|---|---|
| CN | 118011708 | A | 10 May 2024 | None | | | |
| WO | 2023004794 | A1 | 02 February 2023 | CN | 117677882 | A | 08 March 2024 |
| CN | 211478746 | U | 11 September 2020 | WO | 2021146835 | A1 | 29 July 2021 |
| CN | 115437128 | A | 06 December 2022 | CN | 115437128 | B | 02 June 2023 |
| | | | | WO | 2024098911 | A1 | 16 May 2024 |
| JP | 2021043375 | A | 18 March 2021 | JP | 7373331 | B2 | 02 November 2023 |

Form PCT/ISA/210 (patent family annex) (July 2022)

**REFERENCES CITED IN THE DESCRIPTION**

**Patent documents cited in the description**

- CN 202310556257